(19) **Europäisches Patentamt / European Patent Office / Office européen des brevets**

(11) **EP 4 447 316 B1**

(12) **FASCICULE DE BREVET EUROPEEN**

(45) Date de publication et mention
de la délivrance du brevet:
**29.07.2026  Bulletin 2026/31**

(21) Numéro de dépôt: **24169321.7**

(22) Date de dépôt: **09.04.2024**

(51) Classification Internationale des Brevets (IPC):
***H02S 50/00*** *(2014.01)*

(52) Classification Coopérative des Brevets (CPC):
**H02S 50/00**

(54) **DISPOSITIF DE DETERMINATION DE LA DUREE DU JOUR D'AU MOINS UNE JOURNEE, SYSTEME D'EVALUATION DE LA LATITUDE D'IMPLANTATION D'UN GENERATEUR PHOTOVOLTAÏQUE ET EQUIPEMENT DYNAMIQUE PILOTE EN FONCTION DE LA LATITUDE**

VORRICHTUNG ZUR BESTIMMUNG DER TAGESZEIT MINDESTENS EINER TAGESORDNUNG, SYSTEM ZUR AUSWERTUNG DER IMPLANTATIONSRATE EINES PHOTOVOLTAIKGENERATORS UND DYNAMISCHE EINRICHTUNG ZUR DURCHFÜHRUNG DER FUNKTION

DEVICE FOR DETERMINING THE DAY DURATION OF AT LEAST ONE DAY, SYSTEM FOR ASSESSING THE INSTALLATION LATITUDE OF A PHOTOVOLTAIC GENERATOR AND DYNAMIC PILOT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **12.04.2023  FR 2303608**

(43) Date de publication de la demande:
**16.10.2024  Bulletin 2024/42**

(73) Titulaires:
• **BHG**
  **68100 Mulhouse (FR)**
• **Commissariat à l'Energie Atomique et aux Energies Alternatives**
  **75015 Paris (FR)**

(72) Inventeurs:
• **CHAINTREUIL, Nicolas**
  **38054 Grenoble (FR)**
• **FOUCQUIER, Aurélie**
  **38054 Grenoble (FR)**

(74) Mandataire: **Cabinet Bleger-Rhein-Poupon 4a rue de l'Industrie 67450 Mundolsheim (FR)**

(56) Documents cités:
**EP-A1- 3 846 338     US-A1- 2017 176 504**

## Description

L'invention concerne un dispositif de détermination de la durée du jour d'au moins une journée, un système d'évaluation de la latitude d'implantation d'un générateur photovoltaïque ainsi qu'un équipement dynamique piloté en fonction de cette latitude. Le document EP 3 846 338A décrit un système de détermination de la durée du jour.

La présente invention concerne le domaine de la fabrication des équipements dynamiques qui sont configurées pour piloter un système dynamique que comporte un tel équipement dynamique, ceci en fonction de la lumière du jour.

Sans n'y être aucunement limitée, la présente invention trouvera une application particulièrement appropriée lorsqu'il s'agit de piloter un système dynamique, qui est constitué par un tablier de volet roulant, que comporte un équipement dynamique qui est constitué par un tel volet roulant.

On connait, d'ores et déjà, des équipements dynamiques qui comportent un générateur photovoltaïque auprès duquel on relève les valeurs d'une caractéristique électrique (notamment la tension à vide ou le courant de court-circuit) qui est caractéristique de l'éclairement, plus particulièrement de l'irradiance, procuré par le soleil.

A partir des valeurs relevées de cette caractéristique électrique, on pilote le système dynamique ce qui permet, alors, de piloter ce système dynamique (et, donc, l'équipement dynamique) en fonction de d'éclairement du soleil.

Un tel pilotage permet de piloter un système dynamique de manière satisfaisante essentiellement en matière de confort, voire, et dans une moindre mesure, en matière d'économie d'énergie. Cependant, on observera que, dans le cadre d'un tel pilotage l'actionnement crépusculaire du système dynamique (plus particulièrement la fermeture crépusculaire du tablier du volet roulant) intervient usuellement bien après le coucher du soleil, voire à la nuit tombée. De plus, un tel pilotage est sensible aux conditions atmosphériques (notamment à la présence ou au passage de nuages) ainsi qu'à l'implantation (notamment à l'orientation, à la latitude et à l'environnement) du générateur photovoltaïque. Un tel pilotage manque donc de précision de sorte qu'il ne permet pas d'optimiser les performances, en particulier énergétiques, de l'équipement dynamique.

On connait, également, des équipements dynamiques qui pilotent l'actionnement d'un système dynamique en fonction de données, qui sont intégrées dans une base de données que comporte l'équipement dynamique, et qui sont relatives, d'une part, aux dates calendaires et, d'autre part, aux heures de lever du soleil et de coucher du soleil qui correspondent à ces dates calendaires. Ces équipements dynamiques, d'une part, nécessitent une mémoire importante pour l'enregistrement de ces données (a fortiori lorsque celles-ci correspondent à différentes longitudes), d'autre part, nécessitent de disposer d'une horloge qui présente l'inconvénient de dériver dans le temps (sans compter un éventuel changement d'heure entre l'heure d'hiver et l'heure d'été) et, d'autre part encore, imposent des contraintes industrielles de programmation.

Finalement, on observera que les équipements dynamiques connus assurent un pilotage de leur système dynamique sans tenir compte de la latitude d'implantation de cet équipement dynamique qui influe, cependant, de manière notable sur l'éclairement procuré par le soleil et, par conséquent, sur le pilotage de l'équipement dynamique.

La présente invention se veut de remédier aux inconvénients du pilotage, en fonction de l'éclairement, des équipements dynamiques de l'état de la technique.

A cet effet, l'invention concerne un dispositif de détermination de la durée du jour d'au moins une journée. Ce dispositif comporte, d'une part, un générateur photovoltaïque, d'autre part, des moyens de mesure de la valeur d'au moins une grandeur électrique constituée par au moins une tension électrique et/ou par au moins un courant électrique, ceci auprès du générateur photovoltaïque, d'autre part encore, des moyens de détection d'une évolution des valeurs mesurées de ladite au moins une grandeur électrique en fonction du temps, d'autre part aussi, des moyens de détermination de l'instant de l'aube de ladite au moins une journée comme étant l'instant auquel les valeurs mesurées évoluent dans un sens déterminé ainsi que des moyens de détermination de l'instant du crépuscule de ladite au moins une journée comme étant l'instant auquel les valeurs mesurées évoluent dans un autre sens et, d'autre part également, des moyens de détermination de la durée du jour de ladite au moins une journée, ceci à partir de l'instant déterminé de l'aube et de l'instant déterminé du crépuscule.

Cette invention concerne, également, un système d'évaluation de la latitude d'implantation d'un générateur photovoltaïque, ce système d'évaluation comporte, d'une part, un dispositif de détermination de la durée du jour d'au moins une journée qui présente les caractéristiques décrites ci-dessus, d'autre part, des moyens de détermination de la durée du jour d'une pluralité de journées, ceci à partir de la durée du jour fournie par le dispositif de détermination de la durée du jour d'au moins une journée pour cette pluralité de journées, d'autre part encore, des moyens de détermination de la variation de la durée du jour au cours de cette pluralité de journées et, d'autre part aussi, des moyens d'évaluation de la latitude d'implantation du générateur photovoltaïque, ceci à partir de la variation déterminée de la durée du jour au cours de la pluralité de journées.

L'invention concerne, encore. un équipement dynamique qui comporte, d'une part, un système dynamique, d'autre part, un générateur photovoltaïque, et, d'autre part aussi, un dispositif de pilotage de cet équipement dynamique. Cet équipement dynamique est caractérisé par le fait que, d'une part, il comporte un système d'évaluation de la latitude d'implantation du générateur photovoltaïque qui présente les caractéristiques décrites ci-dessus et, d'autre part, le dispositif de pilotage comporte des moyens de pilotage de l'équipement dynamique en fonction d'au moins une température, d'au moins une période dans l'année et de la latitude d'implantation du générateur photovoltaïque déterminée par le système d'évaluation de la latitude d'implantation du générateur photovoltaïque.

De manière additionnelle, l'invention concerne un procédé de détermination de la durée du jour d'au moins une journée. Ce procédé comporte :

- une étape de mesure de la valeur d'au moins une grandeur électrique constituée par au moins une tension électrique et/ou par au moins un courant électrique, ceci auprès d'un générateur photovoltaïque ;
- une étape de détection d'une évolution des valeurs mesurées de ladite au moins une grandeur électrique en fonction du temps ;
- d'une part, une étape de détermination de l'instant de l'aube de ladite au moins une journée comme étant l'instant auquel les valeurs mesurées évoluent dans un sens déterminé et, d'autre part, une étape de détermination de l'instant du crépuscule de ladite au moins une journée comme étant l'instant auquel les valeurs mesurées évoluent dans un autre sens ;
- une étape de détermination de la durée du jour de ladite au moins une journée, ceci à partir de l'instant déterminé de l'aube et de l'instant déterminée du crépuscule.

Cette invention concerne, aussi, un procédé d'évaluation de la latitude d'implantation d'un générateur photovoltaïque. Ce procédé d'évaluation comporte, d'une part, une étape de détermination de la durée du jour d'une pluralité de journées, cette étape de détermination étant réalisée par la mise en œuvre, pour chaque journée de cette pluralité de journées, du procédé de détermination de la durée du jour d'au moins une journée décrit ci-dessus, d'autre part, une étape de détermination de la variation de la durée du jour au cours de cette pluralité de journées et, d'autre part encore, une étape d'évaluation de la latitude d'implantation du générateur photovoltaïque, ceci à partir de la variation déterminée de la durée du jour au cours de la pluralité de journées.

Finalement, l'invention concerne un procédé de pilotage d'un équipement dynamique qui comporte, d'une part, un système dynamique, d'autre part, un générateur photovoltaïque, et, d'autre part aussi, un dispositif de pilotage de cet équipement dynamique. Ce procédé de pilotage est caractérisé par le fait que, d'une part, le procédé de pilotage consiste à piloter l'équipement dynamique en fonction d'au moins une température, d'au moins une période dans l'année et de la latitude d'implantation de l'équipement dynamique et que, d'autre part, la latitude d'implantation de l'équipement dynamique est évaluée par la mise en œuvre du procédé d'évaluation de la latitude d'implantation du générateur photovoltaïque qui présente les caractéristiques décrites ci-dessus.

Ainsi l'invention concerne un dispositif et un procédé de détermination de la durée du jour d'au moins une journée. Ce dispositif et ce procédé sont basés sur la mesure de la valeur d'au moins une caractéristique électrique auprès d'un générateur photovoltaïque ce qui permet, avantageusement, de déterminer la durée de jour d'au moins une journée de manière particulièrement précise, sans nécessiter d'horloge ou d'horodatage, sans nécessiter d'avoir recours à une mémoire importante pour stocker des données relatives à des durées de jours, et en tenant compte de l'implantation du générateur photovoltaïque, en particulier de la longitude et de la latitude de cette implantation.

L'invention concerne, encore. un système, respectivement un procédé, d'évaluation de la latitude d'implantation d'un générateur photovoltaïque. Ce dispositif, respectivement ce procédé, sont liés au dispositif, respectivement au procédé, de détermination de la durée du jour d'au moins une journée et permettent, alors, également, d'évaluer la latitude d'implantation du générateur photovoltaïque de manière particulièrement précise, sans nécessiter d'avoir recours à une mémoire importante pour stocker des données relatives aux latitudes, et en tenant compte de l'implantation du générateur photovoltaïque.

Finalement, l'invention concerne un équipement dynamique qui comporte un tel système d'évaluation de la latitude d'implantation d'un générateur photovoltaïque ainsi qu'un dispositif de pilotage de cet équipement dynamique comportant des moyens de pilotage de l'équipement dynamique en fonction d'au moins une température, d'au moins une période dans l'année et de la latitude d'implantation du générateur photovoltaïque déterminée par le système d'évaluation de la latitude d'implantation d'un générateur photovoltaïque. L'invention concerne, alors, aussi, un procédé de pilotage d'un tel équipement dynamique qui consiste à piloter l'équipement dynamique en fonction d'au moins une température, d'au moins une période dans l'année et de la latitude d'implantation de l'équipement dynamique, cette latitude étant évaluée en mettant en œuvre ledit procédé d'évaluation de la latitude d'implantation d'un générateur photovoltaïque. Ces caractéristiques permettent, avantageusement, de piloter l'équipement dynamique de manière particulièrement précise et en fonction de la latitude d'implantation du générateur photovoltaïque, de la température et d'au moins une période dans l'année (par exemple une période correspondant à au moins un jour ou à une pluralité de jours), plus particulièrement correspondant à une température et/ou à une période de possible canicule. Ces caractéristiques permettent, alors, dans tous les cas de figure, quelle que soit l'implantation géographique du générateur photovoltaïque (en particulier quelle que soit la longitude et quelle que soit la latitude) et quel que soit l'environnement (notamment météorologique, mobilier ou immobilier) de ce générateur photovoltaïque, de piloter l'équipement dynamique (plus particulièrement le système dynamique que comporte cet équipement dynamique) de manière particulièrement précise et fine, ceci notamment en vue d'une optimisation des performances énergétiques d'un tel équipement dynamique et de la construction à laquelle est associé un tel équipement dynamique. Ces caractéristiques permettent, en particulier, de piloter un tel équipement dynamique de manière particulièrement fine et, plus particulièrement, d'assurer un pilotage énergétique particulièrement fin d'un tel équipement dynamique, notamment en tenant compte d'un épisode de canicule.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

[Fig 1] est une vue schématisée d'une courbe de l'évolution de la tension de circuit ouvert (ou tension à vide) Voc d'un générateur photovoltaïque en fonction de l'heure, ceci pour différentes orientations de ce générateur photovoltaïque.
[Fig 2] est une vue schématisée d'une courbe de l'évolution de la tension de circuit ouvert Voc d'un générateur photovoltaïque en fonction du courant de court-circuit Isc de ce générateur photovoltaïque, ceci pour différentes orientations de ce générateur photovoltaïque.
[Fig 3] est une vue schématisée d'une courbe de la variation de la durée du jour en fonction du jour calendaire de l'année, ceci pour une pluralité de latitudes différentes.
[Fig 4] est une vue schématisée et en détail d'une partie de la courbe, illustrée figure 3, de la variation de la durée du jour en fonction du jour calendaire de l'année, ceci pour une pluralité de latitudes différentes.

La présente invention concerne le domaine de la fabrication des équipements dynamiques qui sont configurées pour piloter un système dynamique que comporte un tel équipement dynamique comportant un générateur photovoltaïque, ceci en fonction de la lumière du jour.

L'invention concerne, alors, plus particulièrement, un dispositif de détermination de la durée D du jour d'au moins une journée.

Ce dispositif comporte, d'une part, un générateur photovoltaïque qui adopte, plus particulièrement, la forme d'un panneau photovoltaïque.

D'autre part, ce dispositif comporte des moyens de mesure de la valeur d'au moins une grandeur électrique constituée par au moins une tension électrique et/ou par au moins un courant électrique, ceci auprès du générateur photovoltaïque.

D'autre part encore, ce dispositif comporte des moyens de détection d'une évolution des valeurs mesurées de ladite au moins une grandeur électrique, ceci en fonction du temps.

D'autre part aussi, ce dispositif comporte des moyens de détermination de l'instant de l'aube Ta de ladite au moins une journée comme étant l'instant auquel les valeurs mesurées évoluent dans un sens déterminé. Ce dispositif comporte, encore, des moyens de détermination de l'instant du crépuscule Tc de ladite au moins une journée comme étant l'instant auquel les valeurs mesurées évoluent dans un autre sens.

D'autre part également, ce dispositif comporte des moyens de détermination de la durée D du jour de ladite au moins une journée, ceci à partir de l'instant déterminé de l'aube Ta et de l'instant déterminé du crépuscule Tc.

Tel que mentionné ci-dessus, le dispositif comporte des moyens de mesure de la valeur d'au moins une grandeur électrique constituée par au moins une tension électrique et/ou par au moins un courant électrique.

Selon un premier mode de réalisation, ces moyens de mesure de la valeur d'au moins une grandeur électrique constituée par au moins une tension électrique comportent des moyens de mesure, auprès du générateur photovoltaïque, d'une valeur d'une tension électrique représentative et/ou proche d'une tension de circuit ouvert Voc, autrement dit d'une tension à vide. De tels moyens de mesure peuvent comporter un pont diviseur de tension et un convertisseur analogique numérique d'un microcontrôleur.

De manière alternative et selon un deuxième mode de réalisation, ces moyens de mesure de la valeur d'au moins une grandeur électrique constituée par au moins un courant électrique comportent des moyens de mesure, auprès du générateur photovoltaïque, d'une valeur d'un courant électrique représentatif et/ou proche d'un courant de court-circuit Isc. De tels moyens de mesure peuvent comporter un shunt de mesure du courant de court-circuit ou un capteur de courant relié à une entrée d'un microcontrôleur.

Cependant et selon un troisième mode de réalisation, ces moyens de mesure de la valeur d'au moins une grandeur électrique comportent, d'une part, des moyens de mesure d'une valeur d'une tension électrique représentative et/ou proche d'une tension électrique de circuit ouvert Voc (autrement dit d'une tension à vide) auprès du générateur photovoltaïque et, d'autre part, des moyens de mesure d'une valeur d'un courant électrique représentatif et/ou proche d'un courant électrique de court-circuit Isc auprès du générateur photovoltaïque.

Tel que mentionné ci-dessus, le dispositif comporte des moyens de détection d'une évolution des valeurs mesurées de ladite au moins une grandeur électrique, ceci en fonction du temps, notamment en fonction d'un temps décompté ou de l'heure du jour de ladite au moins une journée.

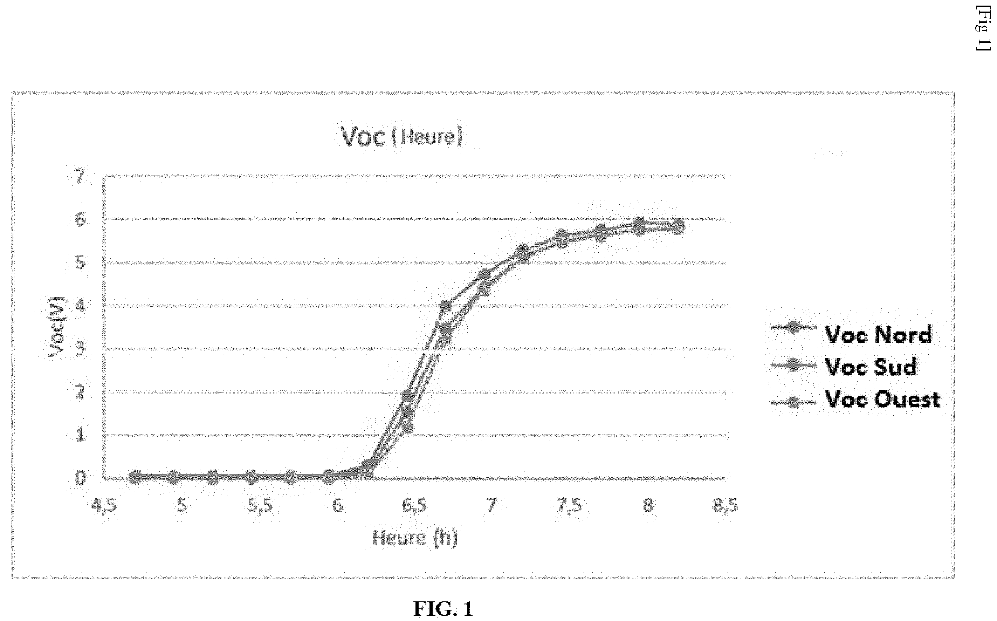

A ce propos, on observera que ces moyens de détection peuvent être configurés pour détecter une évolution des valeurs mesurées de la tension électrique (plus particulièrement pour détecter une évolution des valeurs mesurées d'une tension électrique représentative et/ou proche d'une tension de circuit ouvert Voc), ceci en fonction du temps, notamment en fonction d'un temps décompté ou de l'heure du jour de ladite au moins une journée comme illustré figure 1.

De manière alternative, ces moyens de détection peuvent être configurés pour détecter une évolution des valeurs mesurées du courant électrique (plus particulièrement pour détecter une évolution des valeurs mesurées d'un courant électrique représentatif et/ou proche d'un courant de court-circuit Isc), ceci en fonction du temps, notamment en fonction d'un temps décompté ou de l'heure du jour de ladite au moins une journée.

Encore de manière alternative, ces moyens de détection peuvent être configurés pour détecter une évolution, en fonction du temps (notamment en fonction d'un temps décompté ou de l'heure du jour de ladite au moins une journée), des valeurs qui correspondent au produit, d'une part, des valeurs mesurées de la tension électrique (plus particulièrement de la tension électrique représentative et/ou proche de la tension de circuit ouvert Voc) en fonction du temps (notamment en fonction d'un temps décompté ou de l'heure du jour) et, d'autre part, des valeurs mesurées du courant électrique (plus particulièrement du courant électrique représentatif et/ou proche du courant de court-circuit Isc) en fonction du temps (notamment en fonction d'un temps décompté ou de l'heure du jour).

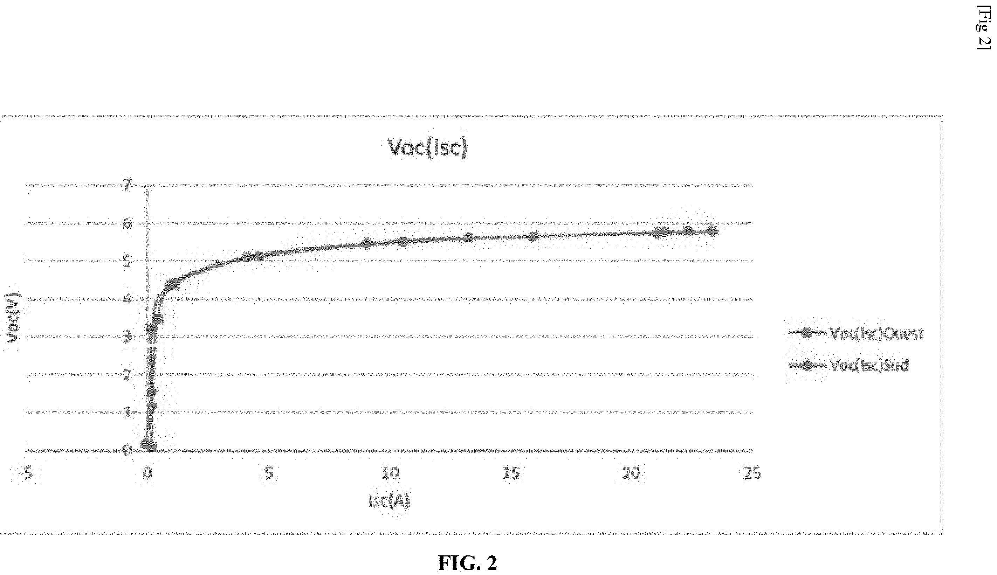

Également de manière alternative, ces moyens de détection peuvent être configurés pour détecter une évolution des valeurs mesurées de la tension électrique (plus particulièrement de la tension électrique représentative et/ou proche de la tension de circuit ouvert Voc et/ou en fonction du temps, plus particulièrement d'un temps décompté ou de l'heure du jour) en fonction des valeurs mesurées du courant électrique (plus particulièrement du courant électrique représentatif et/ou proche du courant de court-circuit Isc et/ou en fonction du temps, plus particulièrement en fonction d'un temps décompté ou de l'heure du jour) comme illustré figure 2.

Selon un premier mode de réalisation, ces moyens de détection d'une évolution des valeurs mesurées de ladite au moins une grandeur électrique, d'une part, comportent des moyens de calcul de la dérivée d'une fonction des valeurs mesurées de ladite au moins une grandeur électrique et, d'autre part, sont configurés pour détecter une évolution de la valeur de la dérivée de la fonction des valeurs mesurées.

A ce propos, on observera que la fonction des valeurs mesurées de ladite au moins une grandeur électrique peut être constituée par une fonction des valeurs de la tension électrique (plus particulièrement de la tension électrique représentative et/ou proche de la tension de circuit ouvert Voc) en fonction du temps (notamment en fonction d'un temps décompté ou de l'heure du jour comme illustré figure 1).

De manière alternative, la fonction des valeurs mesurées de ladite au moins une grandeur électrique peut être constituée par une fonction des valeurs du courant électrique (plus particulièrement du courant électrique représentatif et/ou proche du courant électrique de court-circuit Isc) en fonction du temps (notamment en fonction d'un temps décompté ou de l'heure du jour).

Encore de manière alternative, la fonction des valeurs mesurées de ladite au moins une grandeur électrique peut être constituée par une fonction, en fonction du temps (notamment en fonction d'un temps décompté ou de l'heure du jour de ladite au moins une journée), du produit, d'une part, des valeurs de la tension électrique (plus particulièrement de la tension électrique représentative et/ou proche de la tension de circuit ouvert Voc) en fonction du temps (notamment en fonction d'un temps décompté ou de l'heure du jour) et, d'autre part, des valeurs du courant électrique (plus particulièrement du courant électrique représentatif et/ou proche du courant de court-circuit Isc) en fonction du temps (notamment en fonction d'un temps décompté ou de l'heure du jour).

Également de manière alternative, la fonction des valeurs mesurées de ladite au moins une grandeur électrique peut être constituée par une fonction des valeurs de la tension électrique (plus particulièrement de la tension électrique représentative et/ou proche de la tension de circuit ouvert Voc et/ou en fonction du temps, notamment en fonction d'un temps décompté ou de l'heure du jour) en fonction des valeurs du courant électrique (plus particulièrement du courant électrique représentatif et/ou proche du courant de court-circuit Isc et/ou en fonction du temps, notamment en fonction d'un temps décompté ou de l'heure du jour) comme illustré figure 2.

Tel que mentionné ci-dessus, le dispositif comporte, d'une part, des moyens de détermination de l'instant de l'aube Ta de ladite au moins une journée comme étant l'instant auquel les valeurs mesurées évoluent dans un sens déterminé (plus particulièrement croissent) et, d'autre part, des moyens de détermination de l'instant du crépuscule Tc de ladite au moins une journée comme étant l'instant auquel les valeurs mesurées évoluent dans un autre sens (plus particulièrement décroissent).

A ce propos, on observera que, d'une part, les moyens de détermination de l'instant de l'aube Ta de ladite au moins une journée peuvent comporter des moyens de détermination de l'heure de l'aube TA de ladite au moins une journée comme étant l'heure à laquelle les valeurs mesurées évoluent dans un sens déterminé (plus particulièrement croissent) et, d'autre part, les moyens de détermination de l'instant du crépuscule Tc de ladite au moins une journée peuvent comporter des moyens de détermination de l'heure du crépuscule Tc comme étant l'heure à laquelle les valeurs mesurées évoluent dans un autre sens (plus particulièrement décroissent). A ce propos, on observera que, selon un premier mode de réalisation, d'une part, les moyens de détermination de l'instant (notamment de l'heure) de l'aube Ta sont configurés pour déterminer l'instant (notamment l'heure) de l'aube Ta comme étant l'instant auquel (notamment l'heure à laquelle) les moyens de détection d'une évolution des valeurs mesurées de ladite au moins une grandeur électrique détectent une valeur non nulle de la dérivée de la fonction des valeurs mesurées de ladite au moins une grandeur électrique et, d'autre part, les moyens de détermination de l'instant (notamment de l'heure) du crépuscule Tc sont configurés pour déterminer l'instant (notamment l'heure) du crépuscule Tc comme étant l'instant auquel (notamment l'heure à laquelle) les moyens de détection d'une évolution des valeurs mesurées de ladite au moins une grandeur électrique détectent une valeur nulle de la dérivée de la fonction des valeurs mesurées de ladite au moins une grandeur électrique.

Selon un deuxième mode de réalisation, les moyens de détection d'une évolution des valeurs mesurées de ladite au moins une grandeur électrique sont configurés pour détecter des valeurs mesurées de ladite au moins une grandeur électrique qui franchissent au moins un seuil déterminé.

A ce propos, on observera que ledit au moins un seuil déterminé correspond, plus particulièrement, au bruit de mesure. En fait, ce bruit de mesure peut être variable et peut, par exemple, être tributaire des conditions de l'environnement, notamment de la lumière diurne et/ou nocturne (notamment des lumières artificielles, par exemple de l'éclairage public) et/ou de la température. Un tel seuil peut faire l'objet d'un apprentissage.

Tel que mentionné ci-dessus, le dispositif comporte, d'une part, des moyens de détermination de l'instant (notamment de l'heure) de l'aube Ta de ladite au moins une journée comme étant l'instant auquel (notamment l'heure à laquelle) les valeurs mesurées évoluent dans un sens déterminé et, d'autre part, des moyens de détermination de l'instant (notamment de l'heure) du crépuscule Tc de ladite au moins une journée comme étant l'instant auquel (notamment l'heure à laquelle) les valeurs mesurées évoluent dans un autre sens.

A ce propos, on observera que, d'une part, les moyens de détermination de l'instant (notamment de l'heure) de l'aube Ta sont configurés pour déterminer l'instant (notamment l'heure) de l'aube Ta comme étant l'instant auquel (notamment l'heure à laquelle) les moyens de détection d'une évolution des valeurs mesurées de ladite au moins une grandeur électrique détectent que ces valeurs mesurées de ladite au moins une grandeur électrique passent au-dessus d'un premier seuil déterminé, plus particulièrement sortent d'un premier bruit de mesure, et, d'autre part, les moyens de détermination de l'instant (notamment de l'heure) du crépuscule Tc sont configurés pour déterminer l'instant (notamment l'heure) du crépuscule Tc comme étant l'instant auquel (notamment l'heure à laquelle) les moyens de détection d'une évolution des valeurs mesurées de ladite au moins une grandeur électrique détectent que ces valeurs mesurées de ladite au moins une grandeur électrique passent en-dessous d'un deuxième seuil déterminé (qui peut être différent du premier seuil déterminé), plus particulièrement entrent dans un deuxième bruit de mesure (qui peut être différent du premier bruit de mesure).

Tel que mentionné ci-dessus, le dispositif de détermination de la durée D du jour d'au moins une journée comporte des moyens de détermination de la durée D du jour de ladite au moins une journée, ceci à partir de l'instant déterminé de l'aube Ta et de l'instant déterminé du crépuscule Tc.

A ce propos, on observera que, selon un premier mode de réalisation, les moyens de détermination de la durée D du jour de ladite au moins une journée peuvent comporter, d'une part, des moyens de décompte du temps, d'autre part, des moyens de commande qui sont configurés pour déclencher les moyens de décompte du temps à l'instant déterminé de l'aube Ta ainsi que pour arrêter les moyens de décompte du temps à l'instant déterminé du crépuscule Tc et, d'autre part encore, des moyens pour relever le temps écoulé entre le déclenchement et l'arrêt des moyens de décompte du temps et, d'autre part aussi, des moyens pour déduire la durée D du jour à partir du temps écoulé relevé. Ce mode de réalisation permet, avantageusement, de s'affranchir d'une horloge ou d'un horodatage.

Cependant et selon un deuxième mode de réalisation, les moyens de détermination de la durée D du jour de ladite au moins une journée peuvent comporter, d'une part, au moins une horloge qui fournit l'heure du jour d'au moins une journée et qui est configurée pour fournir l'heure déterminée de l'aube Ta ainsi que l'heure déterminée du crépuscule Tc et, d'autre part, des moyens de calcul qui sont configurés pour calculer la durée D du jour de ladite au moins une journée, ceci à partir de l'heure déterminée de l'aube Ta et de l'heure déterminée du crépuscule Tc fournies par l'horloge.

L'invention concerne, également, un système d'évaluation de la latitude $\varphi$ d'implantation d'un générateur photovoltaïque.

Ce système d'évaluation comporte, d'une part, un dispositif de détermination de la durée D du jour d'au moins une journée qui présente au moins une partie des caractéristiques décrites ci-dessus.

D'autre part, ce système d'évaluation comporte des moyens de détermination de la durée D du jour d'une pluralité de journées, ceci à partir de la durée D du jour fournie par le dispositif de détermination de la durée D du jour d'au moins une journée pour cette pluralité de journées.

Ces moyens de détermination de la durée D du jour d'une pluralité de journées peuvent être configurés pour déterminer la durée D du jour sur une pluralité de journées glissantes.

D'autre part encore, ce système d'évaluation comporte des moyens de détermination de la variation $\delta$ de la durée D du jour au cours de cette pluralité de journées.

D'autre part aussi, ce système d'évaluation comporte des moyens d'évaluation de la latitude $\varphi$ d'implantation du

générateur photovoltaïque, ceci à partir de la variation δ déterminée de la durée D du jour au cours de la pluralité de journées.

Tel que mentionné ci-dessus, le système d'évaluation comporte des moyens de détermination de la variation δ de la durée D du jour au cours de cette pluralité de journées.

A ce propos, on observera que ces moyens de détermination de la variation δ de la durée D du jour comportent des moyens de calcul qui sont configurés pour calculer la pente de la variation δ de la durée D du jour en fonction du rang J des journées de la pluralité de journées.

Également tel que mentionné ci-dessus, le système d'évaluation comporte des moyens d'évaluation de la latitude φ d'implantation du générateur photovoltaïque, ceci à partir de la variation δ déterminée de la durée D du jour au cours de la pluralité de journées.

A ce propos, on observera que ces moyens d'évaluation de la latitude φ d'implantation du générateur photovoltaïque comportent des moyens de comparaison qui sont configurés pour comparer, d'une part, la pente calculée de la variation δ de la durée D du jour en fonction du rang J des journées de la pluralité de journées et, d'autre part, une pluralité de pentes de référence correspondant chacune à une latitude φ déterminée.

A ce propos, on observera que ces pentes de références peuvent être enregistrées dans une mémoire que comporte le système (plus particulièrement les moyens) d'évaluation de la latitude φ d'implantation du générateur photovoltaïque.

Selon un mode particulier de réalisation, la pente peut être calculée pour une durée D de jour correspondant à 12 heures ce qui correspond à l'équinoxe.

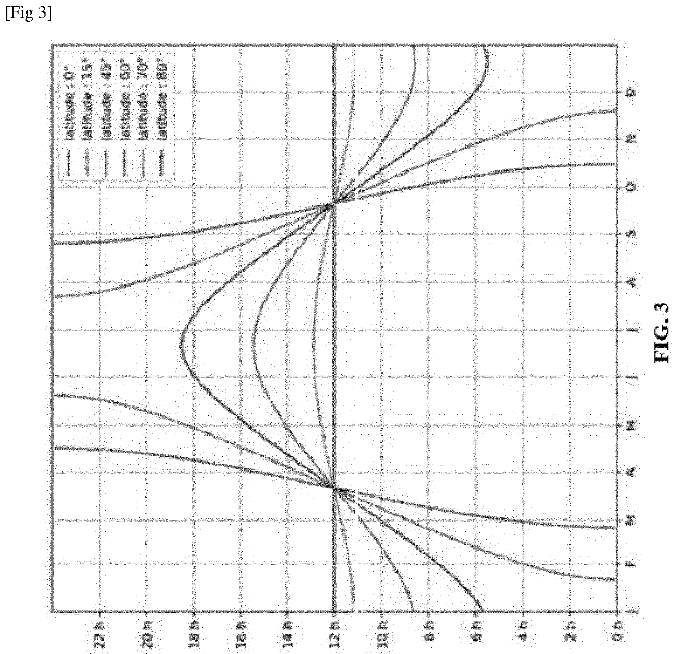

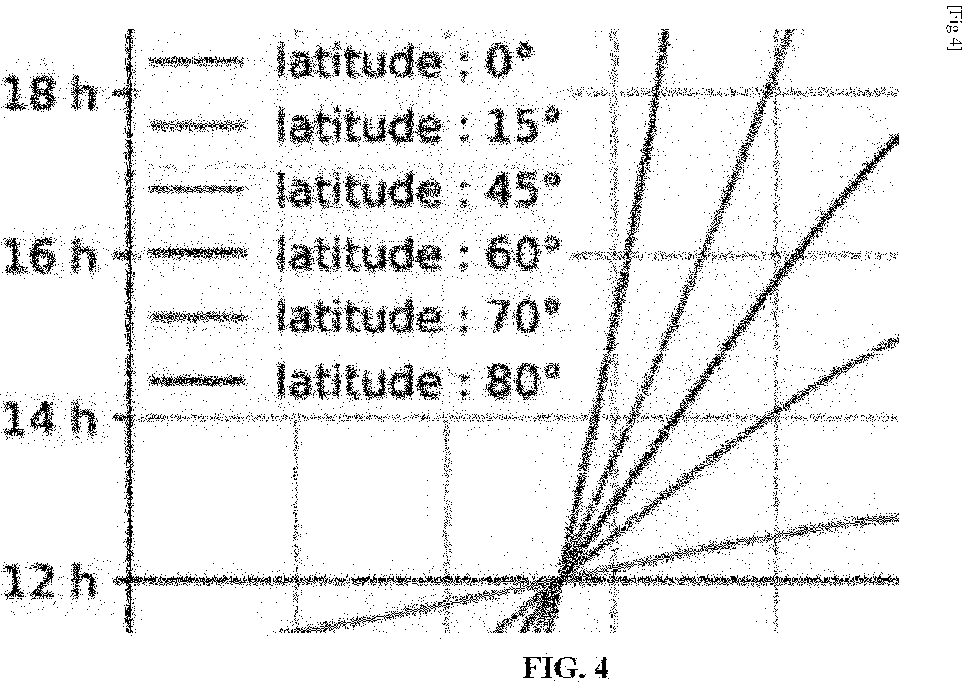

A ce propos, on observera que la pente de la variation δ de la durée D du jour en fonction du rang J des journées calendaires d'une année est caractéristique de la latitude φ, ceci tel qu'il a été illustré figures 3 et 4.

L'invention concerne, également, un équipement dynamique qui comporte, d'une part, un système dynamique.

Sans n'y être aucunement limité, l'équipement dynamique de la présente invention peut être constitué par un volet roulant tandis que le système dynamique peut, alors, être constitué par un tablier de volet roulant que comporte ce volet roulant.

D'autre part, cet équipement dynamique comporte un générateur photovoltaïque qui peut adopter la forme d'un panneau photovoltaïque.

D'autre part encore, cet équipement dynamique peut comporter une batterie, qui est alimentée par le générateur photovoltaïque, et qui alimente le système dynamique en énergie électrique.

D'autre part aussi, l'équipement dynamique comporte un dispositif de pilotage de cet équipement dynamique.

Selon l'invention, d'une part, l'équipement dynamique comporte un système d'évaluation de la latitude φ d'implantation du générateur photovoltaïque, un tel système d'évaluation de la latitude φ présente au moins une partie des caractéristiques décrites ci-dessus.

Également selon l'invention, d'autre part, le dispositif de pilotage (que comporte l'équipement dynamique) comporte des moyens de pilotage de l'équipement dynamique en fonction d'au moins une température (plus particulièrement d'au moins une température ambiante et/ou externe à l'équipement dynamique, par exemple pouvant correspondre à une température de canicule), d'au moins une période dans l'année et de la latitude φ déterminée par le système d'évaluation de la latitude φ d'implantation du générateur photovoltaïque.

A ce propos, on observera que ladite au moins une période de l'année peut correspondre à au moins un jour déterminé (plus particulièrement identifié par le rang J de ce jour dans l'année) ou à une pluralité de jours déterminés (plus particulièrement identifiés par les rangs J de ces jours dans l'année), notamment pendant lequel/lesquels une canicule est possible.

En fait, la variation δ de la durée D du jour est liée au rang J du jour dans l'année par la formule :

$$\delta = 23{,}4 \times \sin(\frac{360}{365} \times (284 + J))$$

De plus, l'angle H0 (qui est, plus particulièrement, l'angle horaire au lever du soleil) est lié à la variation δ de la durée D du jour et à la latitude φ par la formule :

$$\cos(H_0) = -\tan(\delta) \times \tan(\varphi)$$

En outre, la durée D du jour est liée à l'angle H0 par la formule :

$$D = \frac{2 \times H_0}{15}$$

On peut, alors, exprimer l'angle H0 en fonction de la latitude φ et du rang J du jour par l'expression :

$$H_0 = \cos^{-1}\left[-\tan\left(23{,}4 \times \sin(\frac{360}{365} \times (284+J))\right) \times \tan\varphi\right]$$

En tenant compte du fait que :

$$D = \frac{2 \times H_0}{15}$$

On peut, alors, exprimer la durée D du jour en fonction du rang J du jour et de la latitude φ par la formule :

$$D = \frac{2 \times \cos^{-1}\left[-\tan\left(23{,}4 \times \sin(\frac{360}{365} \times (284+J))\right) \times \tan\varphi\right]}{15}$$

Il en découle que :

$$\frac{D \times 15}{2} = \cos^{-1}\left[-\tan\left(23{,}4 \times \sin(\frac{360}{365} \times (284+J))\right) \times \tan\varphi\right]$$

Et que :

$$\cos\left(\frac{D \times 15}{2}\right) = -\tan\left(23{,}4 \times \sin(\frac{360}{365} \times (284+J))\right) \times \tan\varphi$$

La latitude φ est, alors, donnée en fonction de la durée D du jour et du rang J du jour par l'expression :

$$\varphi = \tan^{-1}\left[\frac{\cos\left(\frac{D \times 15}{2}\right)}{-\tan\left(23{,}4 \times \sin(\frac{360}{365} \times (284+J))\right)}\right]$$

On peut, alors, exprimer le rang J du jour en fonction de la durée D du jour et de la latitude φ par la formule :

$$J = \frac{365}{360} \times \sin^{-1}\left(\frac{-\tan^{-1}\left(\frac{\cos\left(\frac{D \times 15}{2}\right)}{\tan\varphi}\right)}{23{,}4}\right) - 284$$

Ainsi, en connaissant, d'une part, la durée D du jour déterminée par le dispositif de détermination de la durée D du jour décrit ci-dessus et, d'autre part, la latitude φ d'implantation d'un générateur photovoltaïque évaluée par le système d'évaluation de la latitude φ d'implantation d'un générateur photovoltaïque décrit ci-dessus, il est possible de déterminer le rang J du jour de l'année.

La connaissance de la durée D du jour, de la latitude φ d'implantation d'un générateur photovoltaïque et du rang J du jour de l'année permet, alors, aux moyens de pilotage de l'équipement dynamique (et, donc, au dispositif de pilotage) de piloter l'équipement dynamique en fonction de ces paramètres.

L'invention concerne, également, un procédé de détermination de la durée D du jour d'au moins une journée.

Ce procédé comporte :

- une étape de mesure de la valeur d'au moins une grandeur électrique constituée par au moins une tension électrique et/ou par au moins un courant électrique, ceci auprès d'un générateur photovoltaïque ;
- une étape de détection d'une évolution des valeurs mesurées de ladite au moins une grandeur électrique en fonction du temps ;
- d'une part, une étape de détermination de l'instant de l'aube Ta de ladite au moins une journée comme étant l'instant auquel les valeurs mesurées évoluent dans un sens déterminé et, d'autre part, une étape de détermination de l'instant du crépuscule Tc de ladite au moins une journée comme étant l'instant auquel les valeurs mesurées évoluent dans un autre sens ;
- une étape de détermination de la durée D du jour de ladite au moins une journée, ceci à partir de l'instant déterminé de l'aube Ta et de l'instant déterminé Tc du crépuscule.

Tel que mentionné ci-dessus, le procédé de détermination de la durée D du jour d'au moins une journée comporte une étape de mesure de la valeur d'au moins une grandeur électrique constituée par au moins une tension électrique et/ou par au moins un courant électrique, ceci auprès d'un générateur photovoltaïque.

Ainsi et selon un premier mode de réalisation, l'étape de mesure de la valeur d'au moins une grandeur électrique constituée par au moins une tension électrique comporte une étape de mesure, auprès du générateur photovoltaïque, d'une valeur d'une tension électrique représentative et/ou proche d'une tension électrique de circuit ouvert Voc, autrement dit de la tension à vide.

De manière alternative et selon un deuxième mode de réalisation, l'étape de mesure de la valeur d'au moins une grandeur électrique constituée par au moins un courant électrique comporte une étape de mesure, auprès du générateur photovoltaïque, d'une valeur d'un courant électrique représentatif et/ou proche d'un courant de court-circuit Isc.

Cependant et selon un troisième mode de réalisation, l'étape de mesure de la valeur d'au moins une grandeur électrique comporte, d'une part, une étape de mesure d'une valeur d'une tension électrique représentative et/ou proche d'une tension électrique de circuit ouvert Voc (autrement dit de la tension à vide) auprès du générateur photovoltaïque et, d'autre part, une étape de mesure d'une valeur d'un courant électrique représentatif et/ou proche d'un courant électrique de court-circuit Isc auprès du générateur photovoltaïque.

Tel que mentionné ci-dessus, le procédé de détermination de la durée D du jour d'au moins une journée comporte une étape de détection d'une évolution des valeurs mesurées de ladite au moins une grandeur électrique, ceci en fonction du temps, notamment en fonction d'un temps décompté ou de l'heure du jour de ladite au moins une journée.

A ce propos, on observera que cette étape de détection d'une évolution peut consister à détecter une évolution des valeurs mesurées de la tension électrique (plus particulièrement une évolution des valeurs mesurées d'une tension électrique représentative et/ou proche d'une tension électrique de circuit ouvert Voc), ceci en fonction du temps, notamment en fonction d'un temps décompté ou de l'heure du jour de ladite au moins une journée comme illustré figure 1.

De manière alternative, cette étape de détection d'une évolution peut consister à détecter une évolution des valeurs mesurées du courant électrique (plus particulièrement une évolution des valeurs mesurées d'un courant électrique représentatif et/ou proche d'un courant électrique de court-circuit Isc), ceci en fonction du temps, notamment en fonction d'un temps écoulé ou de l'heure du jour de ladite au moins une journée.

Encore de manière alternative, cette étape de détection d'une évolution peut consister à détecter une évolution, en fonction du temps (notamment en fonction d'un temps décompté ou de l'heure du jour de ladite au moins une journée), des valeurs qui correspondent au produit, d'une part, des valeurs mesurées de la tension électrique (plus particulièrement de la tension électrique représentative et/ou proche de la tension électrique de circuit ouvert Voc) en fonction du temps (notamment en fonction d'un temps décompté ou de l'heure du jour) et, d'autre part, des valeurs mesurées du courant électrique (plus particulièrement du courant électrique représentatif et/ou proche du courant de court-circuit Isc) en fonction du temps (notamment en fonction d'un temps décompté ou de l'heure du jour).

Également de manière alternative, cette étape de détection d'une évolution peut consister à détecter une évolution des valeurs mesurées de la tension électrique (plus particulièrement de la tension électrique représentative et/ou proche de la tension électrique de circuit ouvert Voc et/ou en fonction du temps, plus particulièrement en fonction d'un temps décompté ou de l'heure du jour) en fonction des valeurs mesurées du courant électrique (plus particulièrement du courant électrique représentatif et/ou proche du courant électrique de court-circuit Isc et/ou en fonction du temps, plus particulièrement en fonction d'un temps décompté ou de l'heure du jour) comme illustré figure 2.

Selon un premier mode de réalisation, l'étape de détection d'une évolution comporte, d'une part, une étape de calcul de la dérivée d'une fonction des valeurs mesurées de ladite au moins une grandeur électrique et, d'autre part, une étape de détection d'une évolution de la valeur de la dérivée de la fonction des valeurs mesurées.

A ce propos et tel que mentionné ci-dessus, on observera que la fonction des valeurs mesurées de ladite au moins une grandeur électrique peut être constituée par une fonction des valeurs de la tension électrique (plus particulièrement de la tension électrique représentative et/ou proche de la tension électrique de circuit ouvert Voc) en fonction du temps (notamment en fonction d'un temps décompté ou de l'heure du jour comme illustré figure 1).

De manière alternative et tel que mentionné ci-dessus, la fonction des valeurs mesurées de ladite au moins une grandeur électrique peut être constituée par une fonction des valeurs du courant électrique (plus particulièrement du courant électrique représentatif et/ou proche du courant électrique de court-circuit Isc) en fonction du temps (notamment en fonction d'un temps décompté ou de l'heure du jour).

Encore de manière alternative et tel que mentionné ci-dessus, la fonction des valeurs mesurées de ladite au moins une grandeur électrique peut être constituée par une fonction, en fonction du temps (notamment en fonction d'un temps décompté ou de l'heure du jour de ladite au moins une journée), du produit, d'une part, des valeurs de la tension électrique (plus particulièrement de la tension électrique représentative et/ou proche de la tension électrique de circuit ouvert Voc) en fonction du temps (notamment en fonction d'un temps décompté ou de l'heure du jour) et, d'autre part, des valeurs du courant électrique (plus particulièrement du courant électrique représentatif et/ou proche du courant électrique de court-circuit Isc) en fonction du temps (notamment en fonction d'un temps décompté ou de l'heure du jour).

Également de manière alternative et tel que mentionné ci-dessus, la fonction des valeurs mesurées de ladite au moins une grandeur électrique peut être constituée par une fonction des valeurs de la tension électrique (plus particulièrement de la tension électrique représentative et/ou proche de la tension électrique de circuit ouvert Voc et/ou en fonction du temps, notamment en fonction d'un temps décompté ou de l'heure du jour) en fonction des valeurs du courant électrique (plus particulièrement du courant électrique représentatif et/ou proche du courant électrique de court-circuit Isc et/ou en fonction du temps, notamment en fonction d'un temps décompté ou de l'heure du jour) comme illustré figure 2.

Tel que mentionné ci-dessus, le procédé de détermination de la durée D du jour d'au moins une journée comporte, d'une part, une étape de détermination de l'instant de l'aube Ta de ladite au moins une journée comme étant l'instant auquel les valeurs mesurées évoluent dans un sens déterminé (plus particulièrement croissent) et, d'autre part, une étape de détermination de l'instant du crépuscule Tc de ladite au moins une journée comme étant l'instant auquel les valeurs mesurées évoluent dans un autre sens (plus particulièrement décroissent).

A ce propos, on observera que, d'une part, l'étape de détermination de l'instant de l'aube Ta de ladite au moins une journée peut être réalisée en déterminant l'heure de l'aube Ta de ladite au moins une journée comme étant l'heure à laquelle les valeurs mesurées évoluent dans un sens déterminé (plus particulièrement croissent) et, d'autre part, l'étape de détermination de l'instant du crépuscule Tc de ladite au moins une journée peut être réalisée en déterminant l'heure du crépuscule Tc comme étant l'heure à laquelle les valeurs mesurées évoluent dans un autre sens (plus particulièrement décroissent).

A ce propos, on observera que, selon un premier mode de réalisation, d'une part, l'étape de détermination de l'instant (notamment de l'heure) de l'aube Ta est, alors, réalisée en déterminant l'instant (notamment l'heure) de l'aube Ta comme étant l'instant auquel (notamment l'heure à laquelle), au cours de l'étape de détection d'une évolution des valeurs mesurées de ladite au moins une grandeur électrique, une valeur non nulle de la dérivée de la fonction des valeurs mesurées de ladite au moins une grandeur électrique a été détectée et, d'autre part, l'étape de détermination de l'instant (notamment de l'heure) du crépuscule Tc est réalisée en déterminant l'instant (notamment l'heure) du crépuscule Tc comme étant l'instant auquel (notamment l'heure à laquelle), au cours de l'étape de détection d'une évolution des valeurs mesurées de ladite au moins une grandeur électrique, une valeur nulle de la dérivée de la fonction des valeurs mesurées de ladite au moins une grandeur électrique a été détectée.

Cependant et selon un deuxième mode de réalisation, l'étape de détection d'une évolution comporte une étape de détection d'un franchissement d'au moins un seuil déterminé par les valeurs mesurées de ladite au moins une grandeur électrique.

Là encore, on observera que ledit au moins un seuil déterminé correspond, plus particulièrement, au bruit de mesure, ceci tel que décrit ci-dessus

Tel que mentionné ci-dessus, le procédé de détermination de la durée D du jour d'au moins une journée comporte, d'une part, une étape de détermination de l'instant (notamment l'heure) de l'aube Ta de ladite au moins une journée comme étant l'instant auquel (notamment l'heure) à laquelle les valeurs mesurées évoluent dans un sens déterminé et, d'autre part, une étape de détermination de l'instant (notamment l'heure) du crépuscule Tc de ladite au moins une journée comme étant l'instant auquel (notamment l'heure à laquelle) les valeurs mesurées évoluent dans un autre sens.

A ce propos, on observera que, d'une part, l'étape de détermination de l'instant (notamment l'heure) de l'aube Ta est réalisée en déterminant l'instant (notamment l'heure) de l'aube Ta comme étant l'instant auquel (notamment l'heure à laquelle), au cours de l'étape de détection d'une évolution des valeurs mesurées de ladite au moins une grandeur électrique, il a été détecté que ces valeurs mesurées de ladite au moins une grandeur électrique passent au-dessus d'un premier seuil déterminé (plus particulièrement sortent d'un premier bruit de mesure) et, d'autre part, l'étape de détermination de l'instant (notamment de l'heure) du crépuscule Tc est réalisée en déterminant l'instant (notamment l'heure) du crépuscule comme Tc étant l'instant auquel (notamment l'heure à laquelle), au cours de l'étape de détection d'une évolution des valeurs mesurées de ladite au moins une grandeur électrique, il a été détecté que ces valeurs mesurées de ladite au moins une grandeur électrique passent en-dessous d'un deuxième seuil déterminé (qui peut être différent du premier seuil déterminé), plus particulièrement entrent dans un deuxième bruit de mesure (qui peut être différent du premier bruit de mesure).

Tel que mentionné ci-dessus, le procédé de détermination de la durée D du jour d'au moins une journée comporte une étape de détermination de la durée D du jour de ladite au moins une journée, ceci à partir de l'instant déterminé de l'aube Ta et de l'instant déterminé du crépuscule Tc.

A ce propos, on observera que, selon un premier mode de réalisation, l'étape de détermination de la durée D du jour de ladite au moins une journée peut comporter, d'une part, une étape de décompte du temps, d'autre part, une étape de déclenchement du décompte du temps à l'instant déterminé de l'aube Ta ainsi qu'une étape d'arrêt du décompte du temps à l'instant déterminé du crépuscule Tc et, d'autre part encore, une étape pour relever le temps écoulé entre le déclenchement et l'arrêt du décompte du temps et, d'autre part aussi, une étape pour déduire la durée D du jour à partir du temps écoulé relevé. Ce mode de réalisation permet, avantageusement, de s'affranchir d'une horloge ou d'un horodatage.

Cependant et selon un deuxième mode de réalisation, l'étape de détermination de la durée D du jour de ladite au moins une journée peut comporter une étape de calcul de la durée D du jour de ladite au moins une journée, ceci à partir de l'heure déterminée de l'aube Ta et de l'heure déterminée du crépuscule Tc fournies par une horloge qui fournit l'heure du jour d'au moins une journée.

On observera que le procédé de détermination de la durée D du jour d'au moins une journée tel que décrit ci-dessus peut, plus particulièrement (mais pas exclusivement), être configuré pour être mis en œuvre par le dispositif de détermination de la durée D du jour d'au moins une journée tel que décrit ci-dessus. Inversement, le dispositif de détermination de la durée D du jour d'au moins une journée tel que décrit ci-dessus peut, plus particulièrement (mais pas exclusivement), être configuré pour mettre en œuvre le procédé de détermination de la durée D du jour d'au moins une journée tel que décrit ci-dessus.

L'invention concerne, également, un procédé d'évaluation de la latitude φ d'implantation d'un générateur photovoltaïque.

Ce procédé d'évaluation comporte, d'une part, une étape de détermination de la durée D du jour d'une pluralité de journées. Cette étape de détermination est réalisée par la mise en œuvre. pour chaque journée de cette pluralité de journées, du procédé de détermination de la durée D du jour d'au moins une journée qui présente les caractéristiques décrites ci-dessus.

Cette étape de détermination de la durée D du jour d'une pluralité de journées peut être configurée pour déterminer la durée D du jour sur une pluralité de journées glissantes.

Ce procédé d'évaluation comporte, d'autre part, une étape de détermination de la variation δ de la durée D du jour au cours de cette pluralité de journées et, d'autre part encore, une étape d'évaluation de la latitude φ d'implantation du générateur photovoltaïque, ceci à partir de la variation δ déterminée de la durée D du jour au cours de la pluralité de journées.

Tel que mentionné ci-dessus, le procédé d'évaluation de la latitude φ d'implantation comporte une étape de détermination de la variation δ de la durée D du jour au cours de cette pluralité de journées

A ce propos, on observera que cette étape de détermination de la variation δ de la durée D du jour consiste à calculer la pente de la variation δ de la durée D du jour en fonction du rang J des journées de la pluralité de journées.

Également tel que mentionné ci-dessus, le procédé d'évaluation de la latitude φ d'implantation du générateur photovoltaïque comporte une étape d'évaluation de la latitude φ d'implantation du générateur photovoltaïque, ceci à partir de la variation δ déterminée de la durée D du jour au cours de la pluralité de journées.

A ce propos, on observera que l'étape d'évaluation de la latitude φ d'implantation du générateur photovoltaïque consiste à comparer, d'une part, la pente calculée de la variation δ de la durée D du jour en fonction du rang J des journées de la pluralité de journées et, d'autre part, une pluralité de pentes de référence correspondant chacune à une latitude φ déterminée.

A ce propos, on observera que ces pentes de références peuvent être enregistrées dans une mémoire que comporte le système (plus particulièrement les moyens) d'évaluation de la latitude φ d'implantation du générateur photovoltaïque.

Selon un mode particulier de réalisation, la pente peut être calculée pour une durée D de jour correspondant à 12 heures ce qui correspond à l'équinoxe.

A ce propos, on observera que la pente de la variation δ de la durée D du jour en fonction du rang J des journées calendaires d'une année est caractéristique de la latitude φ, ceci tel qu'il a été illustré figures 3 et 4.

On observera que le procédé d'évaluation de la latitude φ d'implantation d'un générateur photovoltaïque tel que décrit ci-dessus peut, plus particulièrement (mais pas exclusivement), être configuré pour être mis en œuvre par le système d'évaluation de la latitude φ d'implantation d'un générateur photovoltaïque tel que décrit ci-dessus. Inversement, le système d'évaluation de la latitude φ d'implantation d'un générateur photovoltaïque tel que décrit ci-dessus peut, plus particulièrement (mais pas exclusivement), être configuré pour mettre en œuvre le procédé d'évaluation de la latitude φ d'implantation d'un générateur photovoltaïque tel que décrit ci-dessus.

L'invention concerne, également, un procédé de pilotage d'un équipement dynamique.

Tel que mentionné ci-dessus, un tel équipement dynamique comporte, d'une part, un système dynamique.

Là encore, l'équipement dynamique de la présente invention peut être constitué par un volet roulant tandis que le système dynamique peut, alors, être constitué par un tablier de volet roulant que comporte ce volet roulant.

D'autre part, cet équipement dynamique comporte un générateur photovoltaïque qui peut adopter la forme d'un panneau photovoltaïque.

D'autre part encore, cet équipement dynamique comporte une batterie, qui est alimentée par le générateur photovoltaïque, et qui alimente le système dynamique en énergie électrique.

D'autre part aussi, l'équipement dynamique comporte un dispositif de pilotage de cet équipement dynamique.

Le procédé de pilotage d'un tel équipement dynamique consiste à piloter cet équipement dynamique en fonction d'au moins une température (plus particulièrement d'au moins une température ambiante et/ou externe à l'équipement dynamique, par exemple pouvant correspondre à une température de canicule), d'au moins une période dans l'année et de la latitude φ d'implantation de l'équipement dynamique.

A ce propos, on observera que ladite au moins une période de l'année peut correspondre à au moins un jour déterminé (plus particulièrement identifié par le rang J de ce jour dans l'année) ou à une pluralité de jours déterminés (plus particulièrement identifiés par les rangs J de ces jours dans l'année), notamment pour lequel/lesquels une canicule est possible.

En fait, dans ce procédé de pilotage, la latitude φ d'implantation de l'équipement dynamique est évaluée par la mise en œuvre du procédé d'évaluation de la latitude φ d'implantation du générateur photovoltaïque qui présente les caractéristiques décrites ci-dessus.

On observera que le procédé de pilotage d'un équipement dynamique tel que décrit ci-dessus peut, plus particulièrement (mais pas exclusivement), être configuré pour être mis en œuvre par l'équipement dynamique et/ou par le dispositif de pilotage de cet équipement dynamique tel que décrit ci-dessus. Inversement, l'équipement dynamique et/ou le dispositif de pilotage tel que décrit ci-dessus peut, plus particulièrement (mais pas exclusivement) être configuré pour mettre en œuvre le procédé de pilotage d'un équipement dynamique tel que décrit ci-dessus.

**Revendications**

1. Système d'évaluation de la latitude (φ) d'implantation d'un générateur photovoltaïque, ce système d'évaluation comporte :

   - un dispositif de détermination de la durée (D) du jour d'au moins une journée, ce dispositif comporte :

      - d'une part, un générateur photovoltaïque,
      - d'autre part, des moyens de mesure de la valeur d'au moins une grandeur électrique constituée par au moins une tension électrique et/ou par au moins un courant électrique, ceci auprès du générateur photovoltaïque,
      - d'autre part encore, des moyens de détection d'une évolution des valeurs mesurées de ladite au moins une grandeur électrique en fonction du temps,
      - d'autre part aussi, des moyens de détermination de l'instant de l'aube (Ta) de ladite au moins une journée comme étant l'instant auquel les valeurs mesurées évoluent dans un sens déterminé ainsi que des moyens de détermination de l'instant du crépuscule (Tc) de ladite au moins une journée comme étant l'instant auquel les valeurs mesurées évoluent dans un autre sens et,
      - d'autre part également, des moyens de détermination de la durée (D) du jour de ladite au moins une journée, ceci à partir de l'instant déterminé de l'aube (Ta) et de l'instant déterminé du crépuscule (Tc),

   - des moyens de détermination de la durée (D) du jour d'une pluralité de journées, ceci à partir de la durée (D) du jour fournie par le dispositif de détermination de la durée (D) du jour d'au moins une journée pour cette pluralité de journées,

- des moyens de détermination de la variation de la durée (D) du jour au cours de cette pluralité de journées et,
- des moyens d'évaluation de la latitude (φ) d'implantation du générateur photovoltaïque, ceci à partir de la variation déterminée de la durée (D) du jour au cours de la pluralité de journées.

**2.** Système d'évaluation de la latitude (φ) d'implantation d'un générateur photovoltaïque selon la revendication 1, **caractérisé par le fait que** les moyens de détermination de la variation de la durée (D) du jour comportent des moyens de calcul qui sont configurés pour calculer la pente de la variation de la durée (D) du jour en fonction du rang (J) des journées de la pluralité de journées.

**3.** Système d'évaluation de la latitude (φ) d'implantation d'un générateur photovoltaïque selon la revendication 2, **caractérisé par le fait que** les moyens d'évaluation de la latitude (φ) d'implantation du générateur photovoltaïque comportent des moyens de comparaison qui sont configurés pour comparer, d'une part, la pente calculée de la variation de la durée (D) du jour en fonction du rang (J) des journées de la pluralité de journées et, d'autre part, une pluralité de pentes de référence correspondant chacune à une latitude (φ) déterminée.

**4.** Système d'évaluation de la latitude (φ) d'implantation d'un générateur photovoltaïque selon l'une quelconque des revendications précédentes, **caractérisé par le fait que** les moyens de mesure de la valeur d'au moins une grandeur électrique constituée par au moins une tension électrique comportent des moyens de mesure, auprès du générateur photovoltaïque, d'une valeur d'une tension électrique représentative et/ou proche d'une tension de circuit ouvert (Voc).

**5.** Système d'évaluation de la latitude (φ) d'implantation d'un générateur photovoltaïque selon l'une quelconque des revendications 1 à 3, **caractérisé par le fait que** les moyens de mesure de la valeur d'au moins une grandeur électrique constituée par au moins un courant électrique comportent des moyens de mesure, auprès du générateur photovoltaïque, d'une valeur d'un courant électrique représentatif et/ou proche d'un courant de court-circuit (Isc).

**6.** Système d'évaluation de la latitude (φ) d'implantation d'un générateur photovoltaïque selon l'une quelconque des revendications 1 à 3, **caractérisé par le fait que** les moyens de détection d'une évolution des valeurs mesurées de ladite au moins une grandeur électrique, d'une part, comportent des moyens de calcul de la dérivée d'une fonction des valeurs mesurées de ladite au moins une grandeur électrique et, d'autre part, sont configurés pour détecter une évolution de la valeur de la dérivée de la fonction des valeurs mesurées.

**7.** Système d'évaluation de la latitude (φ) d'implantation d'un générateur photovoltaïque selon la revendication 6, **caractérisé par le fait que**, d'une part, les moyens de détermination de l'instant de l'aube (Ta) sont configurés pour déterminer l'instant de l'aube (Ta) comme étant l'instant auquel les moyens de détection d'une évolution des valeurs mesurées de ladite au moins une grandeur électrique détectent une valeur non nulle de la dérivée de la fonction des valeurs mesurées de ladite au moins une grandeur électrique et, d'autre part, les moyens de détermination de l'instant du crépuscule (Tc) sont configurés pour déterminer l'instant du crépuscule (Tc) comme étant l'instant auquel les moyens de détection d'une évolution des valeurs mesurées de ladite au moins une grandeur électrique détectent une valeur nulle de la dérivée de la fonction des valeurs mesurées de ladite au moins une grandeur électrique.

**8.** Système d'évaluation de la latitude (φ) d'implantation d'un générateur photovoltaïque selon l'une quelconque des revendications 1 à 3, **caractérisé par le fait que** les moyens de détection d'une évolution des valeurs mesurées de ladite au moins une grandeur électrique sont configurés pour détecter des valeurs mesurées de ladite au moins une grandeur électrique qui franchissent au moins un seuil déterminé.

**9.** Système d'évaluation de la latitude (φ) d'implantation d'un générateur photovoltaïque selon la revendication 8, **caractérisé par le fait que**, d'une part, les moyens de détermination de l'instant de l'aube (Ta) sont configurés pour déterminer l'instant de l'aube (Ta) comme étant l'instant auquel les moyens de détection d'une évolution des valeurs mesurées de ladite au moins une grandeur électrique détectent que ces valeurs mesurées de ladite au moins une grandeur électrique passent au-dessus d'un premier seuil déterminé et, d'autre part, les moyens de détermination de l'instant du crépuscule (Tc) sont configurés pour déterminer l'instant du crépuscule (Tc) comme étant l'instant auquel les moyens de détection d'une évolution des valeurs mesurées de ladite au moins une grandeur électrique détectent que ces valeurs mesurées de ladite au moins une grandeur électrique passent en-dessous d'un deuxième seuil déterminé.

**10.** Système d'évaluation de la latitude (φ) d'implantation d'un générateur photovoltaïque selon l'une quelconque des revendications précédentes, **caractérisé par le fait que** les moyens de détermination de la durée (D) du jour de ladite au moins une journée comporte, d'une part, des moyens de décompte du temps, d'autre part, des moyens de commande qui sont configurés pour déclencher les moyens de décompte du temps à l'instant déterminé de l'aube (Ta) ainsi que pour arrêter les moyens de décompte du temps à l'instant déterminé du crépuscule (Tc) et, d'autre part encore, des moyens pour relever le temps écoulé entre le déclenchement et l'arrêt des moyens de décompte du temps et, d'autre part aussi, des moyens pour déduire la durée (D) du jour à partir du temps écoulé relevé.

11. Equipement dynamique qui comporte, d'une part, un système dynamique, d'autre part, un générateur photovoltaïque et, d'autre part aussi, un dispositif de pilotage de cet équipement dynamique, **caractérisé par le fait que**, d'une part, il comporte un système d'évaluation de la latitude ($\varphi$) d'implantation du générateur photovoltaïque conforme à l'une quelconque des revendications précédentes et, d'autre part, le dispositif de pilotage comporte des moyens de pilotage de l'équipement dynamique en fonction d'au moins une température, d'au moins une période dans l'année et de la latitude ($\varphi$) d'implantation du générateur photovoltaïque déterminée par le système d'évaluation de la latitude ($\varphi$) d'implantation du générateur photovoltaïque.

12. Procédé d'évaluation de la latitude ($\varphi$) d'implantation d'un générateur photovoltaïque, ce procédé d'évaluation comporte :

    - d'une part, une étape de détermination de la durée (D) du jour d'une pluralité de journées, cette étape de détermination étant réalisée par la mise en œuvre, pour chaque journée de cette pluralité de journées, d'un procédé de détermination de la durée (D) du jour d'au moins une journée qui comporte :

        - une étape de mesure de la valeur d'au moins une grandeur électrique constituée par au moins une tension électrique et/ou par au moins un courant électrique, ceci auprès d'un générateur photovoltaïque ;
        - une étape de détection d'une évolution des valeurs mesurées de ladite au moins une grandeur électrique en fonction du temps ;
        - d'une part, une étape de détermination de l'instant de l'aube (Ta) de ladite au moins une journée comme étant l'instant auquel les valeurs mesurées évoluent dans un sens déterminé et, d'autre part, une étape de détermination de l'instant du crépuscule (Tc) de ladite au moins une journée comme étant l'instant auquel les valeurs mesurées évoluent dans un autre sens ;
        - une étape de détermination de la durée (D) du jour de ladite au moins une journée, ceci à partir de l'instant déterminé de l'aube (Ta) et de l'instant déterminé du crépuscule (Tc),

    - d'autre part, une étape de détermination de la variation de la durée (D) du jour au cours de cette pluralité de journées et,
    - d'autre part encore, une étape d'évaluation de la latitude ($\varphi$) d'implantation du générateur photovoltaïque, ceci à partir de la variation déterminée de la durée (D) du jour au cours de la pluralité de journées.

13. Procédé d'évaluation de la latitude ($\varphi$) d'implantation d'un générateur photovoltaïque selon la revendication 12, **caractérisé par le fait que** l'étape de détermination de la variation de la durée (D) du jour consiste à calculer la pente de la variation de la durée (D) du jour en fonction du rang (J) des journées de la pluralité de journées.

14. Procédé d'évaluation de la latitude ($\varphi$) d'implantation d'un générateur photovoltaïque selon la revendication 13, **caractérisé par le fait que** l'étape d'évaluation de la latitude ($\varphi$) d'implantation du générateur photovoltaïque consiste à comparer, d'une part, la pente calculée de la variation de la durée (D) du jour en fonction du rang (J) des journées de la pluralité de journées et, d'autre part, une pluralité de pentes de référence correspondant chacune à une latitude ($\varphi$) déterminée.

15. Procédé d'évaluation de la latitude ($\varphi$) d'implantation d'un générateur photovoltaïque selon l'une quelconque des revendications 12 à 14, **caractérisé par le fait que** l'étape de mesure de la valeur de ladite au moins une grandeur électrique constituée par au moins une tension électrique comporte une étape de mesure, auprès du générateur photovoltaïque, d'une valeur d'une tension électrique représentative et/ou proche d'une tension électrique de circuit ouvert (Voc).

16. Procédé d'évaluation de la latitude ($\varphi$) d'implantation d'un générateur photovoltaïque selon l'une quelconque des revendications 12 à 14, **caractérisé par le fait que** l'étape de mesure de la valeur de ladite au moins une grandeur électrique constituée par au moins un courant électrique comporte une étape de mesure, auprès du générateur photovoltaïque, d'une valeur d'un courant électrique représentatif et/ou proche d'un courant de court-circuit (Isc).

17. Procédé d'évaluation de la latitude (φ) d'implantation d'un générateur photovoltaïque selon l'une quelconque des revendications 12 à 14, **caractérisé par le fait que** l'étape de détection d'une évolution comporte, d'une part, une étape de calcul de la dérivée d'une fonction des valeurs mesurées de ladite au moins une grandeur électrique et, d'autre part, une étape de détection d'une évolution de la valeur de la dérivée de la fonction des valeurs mesurées.

18. Procédé d'évaluation de la latitude (φ) d'implantation d'un générateur photovoltaïque selon la revendication 17, **caractérisé par le fait que**, d'une part, l'étape de détermination de l'instant de l'aube (Ta) est réalisée en déterminant l'instant de l'aube (Ta) comme étant l'instant auquel, au cours de l'étape de détection d'une évolution des valeurs mesurées de ladite au moins une grandeur électrique, une valeur non nulle de la dérivée de la fonction des valeurs mesurées de ladite au moins une grandeur électrique a été détectée et, d'autre part, l'étape de détermination de l'instant du crépuscule (Tc) est réalisée en déterminant l'instant du crépuscule (Tc) comme étant l'instant auquel, au cours de l'étape de détection d'une évolution des valeurs mesurées de ladite au moins une grandeur électrique, une valeur nulle de la dérivée de la fonction des valeurs mesurées de ladite au moins une grandeur électrique a été détectée.

19. Procédé d'évaluation de la latitude (φ) d'implantation d'un générateur photovoltaïque selon l'une quelconque des revendications 12 à 14, **caractérisé par le fait que** l'étape de détection d'une évolution comporte une étape de détection d'un franchissement d'au moins un seuil déterminé par les valeurs mesurées de ladite au moins une grandeur électrique.

20. Procédé d'évaluation de la latitude (φ) d'implantation d'un générateur photovoltaïque selon la revendication 19, **caractérisé par le fait que**, d'une part, l'étape de détermination de l'instant de l'aube (Ta) est réalisée en déterminant l'instant de l'aube (Ta) comme étant l'instant auquel, au cours de l'étape de détection d'une évolution des valeurs mesurées de ladite au moins une grandeur électrique, il a été détecté que ces valeurs mesurées de ladite au moins une grandeur électrique passent au-dessus d'un premier seuil déterminé et, d'autre part, l'étape de détermination de l'instant du crépuscule (Tc) est réalisée en déterminant l'instant du crépuscule (Tc) comme étant l'instant auquel, au cours de l'étape de détection d'une évolution des valeurs mesurées de ladite au moins une grandeur électrique, il a été détecté que ces valeurs mesurées de ladite au moins une grandeur électrique passent en-dessous d'un deuxième seuil déterminé.

21. Procédé d'évaluation de la latitude (φ) d'implantation d'un générateur photovoltaïque selon l'une quelconque des revendications 12 à 14, **caractérisé par le fait que** l'étape de détermination de la durée (D) du jour de ladite au moins une journée comporte, d'une part, une étape de décompte du temps, d'autre part, une étape de déclenchement du décompte du temps à l'instant déterminé de l'aube (Ta) ainsi qu'une étape d'arrêt du décompte du temps à l'instant déterminé du crépuscule (Tc) et, d'autre part encore, une étape pour relever le temps écoulé entre le déclenchement et l'arrêt du décompte du temps et, d'autre part aussi, une étape pour déduire la durée (D) du jour à partir du temps écoulé relevé.

22. Procédé de pilotage d'un équipement dynamique qui comporte, d'une part, un système dynamique, d'autre part, un générateur photovoltaïque, et, d'autre part aussi, un dispositif de pilotage de cet équipement dynamique, **caractérisé par le fait que**, d'une part, le procédé de pilotage consiste à piloter l'équipement dynamique en fonction d'au moins une température, d'au moins une période dans l'année et de la latitude (φ) d'implantation de l'équipement dynamique et que, d'autre part, la latitude (φ) d'implantation de l'équipement dynamique est évaluée par la mise en œuvre du procédé d'évaluation de la latitude (φ) d'implantation du générateur photovoltaïque conforme à l'une quelconque des revendication 12 à 21.

**Patentansprüche**

1. System zur Evaluierung der geographischen Breite (φ) der Aufstellung eines Photovoltaikgenerators, wobei dieses Evaluierungssystem umfasst:

- eine Vorrichtung zur Bestimmung der Tagesdauer (D) von mindestens einem Tag, wobei diese Vorrichtung umfasst:

- einerseits einen Photovoltaikgenerator,
- ferner Mittel zur Messung des Wertes mindestens einer elektrischen Größe, bestehend aus mindestens einer elektrischen Spannung und/oder mindestens einem elektrischen Strom, und zwar am Photovoltaikgenerator,

- ferner Mittel zur Erfassung einer zeitlichen Entwicklung der gemessenen Werte der mindestens einen elektrischen Größe,

- ferner Mittel zur Bestimmung des Zeitpunkts der Morgendämmerung (Ta) des mindestens einen Tages als den Zeitpunkt, zu dem sich die Messwerte in eine bestimmte Richtung entwickeln, sowie Mittel zur Bestimmung des Zeitpunkts der Abenddämmerung (Tc) des mindestens einen Tages als den Zeitpunkt, zu dem sich die Messwerte in eine andere Richtung entwickeln, und

- ferner ebenfalls Mittel zur Bestimmung der Tagesdauer (D) des mindestens einen Tages, und zwar ausgehend vom bestimmten Zeitpunkt der Morgendämmerung (Ta) und vom bestimmten Zeitpunkt der Abenddämmerung (Tc),

- Mittel zur Bestimmung der Tagesdauer (D) einer Mehrzahl von Tagen, und zwar ausgehend von der Tagesdauer (D), die von der Vorrichtung zur Bestimmung der Tagesdauer (D) mindestens eines Tages für diese Mehrzahl von Tagen geliefert wird,

- Mittel zur Bestimmung der Veränderung der Tagesdauer (D) im Laufe dieser Mehrzahl von Tagen und,

- Mittel zur Evaluierung der geographischen Breite ($\varphi$) der Aufstellung des Photovoltaikgenerators, und zwar auf der Grundlage der bestimmten Veränderung der Tagesdauer (D) im Verlauf der Mehrzahl von Tagen.

2. System zur Evaluierung der geographischen Breite ($\varphi$) der Aufstellung eines Photovoltaikgenerators nach Anspruch 1, **dadurch gekennzeichnet, dass** die Mittel zur Bestimmung der Veränderung der Tagesdauer (D) Berechnungsmittel umfassen, die dazu ausgebildet sind, die Steigung der Veränderung der Tagesdauer (D) in Abhängigkeit von der Rangfolge (J) der Tage der Mehrzahl von Tagen zu berechnen.

3. System zur Evaluierung der geographischen Breite ($\varphi$) der Aufstellung eines Photovoltaikgenerators nach Anspruch 2, **dadurch gekennzeichnet, dass** die Mittel zur Evaluierung der geographischen Breite ($\varphi$) der Aufstellung des Photovoltaikgenerators Vergleichsmittel umfassen, die dazu ausgebildet sind, einerseits die berechnete Steigung der Veränderung der Tagesdauer (D) in Abhängigkeit von der Rangfolge (J) der Tage der Mehrzahl von Tagen und andererseits eine Mehrzahl von Referenzsteigungen zu vergleichen, die jeweils einer bestimmten Breite ($\varphi$) entsprechen.

4. System zur Evaluierung der geographischen Breite ($\varphi$) der Aufstellung eines Photovoltaikgenerators nach einem der vorstehenden Ansprüche, **dadurch gekennzeichnet, dass** die Mittel zur Messung des Wertes mindestens einer elektrischen Größe, die aus mindestens einer elektrischen Spannung besteht, am Photovoltaikgenerator Mittel zur Messung eines Wertes einer elektrischen Spannung umfassen, der repräsentativ für eine Leerlaufspannung (Voc) ist und/oder dieser nahekommt.

5. System zur Evaluierung der geographischen Breite ($\varphi$) der Aufstellung eines Photovoltaikgenerators nach einem der Ansprüche 1 bis 3, **dadurch gekennzeichnet, dass** die Mittel zur Messung des Wertes mindestens einer elektrischen Größe, die aus mindestens einem elektrischen Strom besteht, am Photovoltaikgenerator Mittel zur Messung eines Wertes eines elektrischen Stroms umfassen, der repräsentativ für einen Kurzschlussstrom (Isc) ist und/oder diesem nahekommt.

6. System zur Evaluierung der geographischen Breite ($\varphi$) der Aufstellung eines Photovoltaikgenerators nach einem der Ansprüche 1 bis 3, **dadurch gekennzeichnet, dass** die Mittel zur Erfassung einer Entwicklung der gemessenen Werte der mindestens einen elektrischen Größe einerseits Mittel zur Berechnung der Ableitung einer Funktion der Messwerte der mindestens einen elektrischen Größe umfassen und andererseits dazu ausgebildet sind, eine Entwicklung des Wertes der Ableitung der Funktion der Messwerte zu erfassen.

7. System zur Evaluierung der geographischen Breite ($\varphi$) der Aufstellung eines Photovoltaikgenerators nach Anspruch 6, **dadurch gekennzeichnet, dass** einerseits die Mittel zur Bestimmung des Zeitpunkts der Morgendämmerung (Ta) dazu ausgebildet sind, den Zeitpunkt der Morgendämmerung (Ta) als den Zeitpunkt zu bestimmen, zu dem die Mittel zur Erfassung einer Veränderung der Messwerte der mindestens einen elektrischen Größe einen von Null verschiedenen Wert der Ableitung der Funktion der Messwerte der mindestens einen elektrischen Größe erfassen, und andererseits die Mittel zur Bestimmung des Zeitpunkts der Abenddämmerung (Tc) dazu ausgebildet sind, den Zeitpunkt der Abenddämmerung (Tc) als den Zeitpunkt zu bestimmen, zu dem die Mittel zur Erfassung einer Entwicklung der Messwerte der mindestens einen elektrischen Größe einen Wert von Null der Ableitung der Funktion der Messwerte der mindestens einen elektrischen Größe erfassen.

**8.** System zur Evaluierung der geographischen Breite (φ) der Aufstellung eines Photovoltaikgenerators nach einem der Ansprüche 1 bis 3, **dadurch gekennzeichnet, dass** die Mittel zur Erfassung einer Entwicklung der Messwerte der mindestens einen elektrischen Größe dazu ausgebildet sind, Messwerte der mindestens einen elektrischen Größe zu erfassen, die mindestens einen bestimmten Schwellenwert überschreiten.

**9.** System zur Evaluierung der geographischen Breite (φ) der Aufstellung eines Photovoltaikgenerators nach Anspruch 8, **dadurch gekennzeichnet, dass** einerseits die Mittel zur Bestimmung des Zeitpunkts der Morgendämmerung (Ta) dazu ausgebildet sind, den Zeitpunkt der Morgendämmerung (Ta) als den Zeitpunkt zu bestimmen, zu dem die Mittel zur Erfassung einer Veränderung der Messwerte der mindestens einen elektrischen Größe erfassen, dass diese Messwerte der mindestens einen elektrischen Größe einen ersten festgelegten Schwellenwert überschreiten, und andererseits die Mittel zur Bestimmung des Zeitpunkts der Abenddämmerung (Tc) dazu ausgebildet sind, den Zeitpunkt der Abenddämmerung (Tc) als den Zeitpunkt zu bestimmen, zu dem die Mittel zur Erfassung einer Entwicklung der Messwerte der mindestens einen elektrischen Größe erfassen, dass diese Messwerte der mindestens einen elektrischen Größe unter einen zweiten festgelegten Schwellenwert fallen.

**10.** System zur Evaluierung der geographischen Breite (φ) der Aufstellung eines Photovoltaikgenerators nach einem der vorstehenden Ansprüche, **dadurch gekennzeichnet, dass** die Mittel zur Bestimmung der Tagesdauer (D) des mindestens einen Tages einerseits Zeitmessmittel und andererseits Steuermittel umfassen, die dazu ausgebildet sind, die Zeitmessmittel zum festgelegten Zeitpunkt der Morgendämmerung (Ta) auszulösen sowie die Zeitmessmittel zum festgelegten Zeitpunkt der Abenddämmerung (Tc) anzuhalten, und ferner Mittel zum Erfassen der zwischen dem Auslösen und dem Anhalten der Zeitmessmittel verstrichenen Zeit sowie Mittel zum Ableiten der Tagesdauer (D) aus der erfassten verstrichenen Zeit umfassen.

**11.** Dynamische Anlage, die einerseits ein dynamisches System, andererseits einen Photovoltaikgenerator und ferner eine Steuervorrichtung für diese dynamische Anlage umfasst, **dadurch gekennzeichnet, dass** sie einerseits ein System zur Evaluierung der geographischen Breite (φ) des Standorts des Photovoltaikgenerators nach einem der vorstehenden Ansprüche umfasst und andererseits die Steuervorrichtung Mittel zur Steuerung der dynamischen Anlage umfasst, in Abhängigkeit von mindestens einer Temperatur, mindestens einer Jahreszeit und der durch das System zur Bestimmung der geographischen Breite (φ) der Aufstellung des Photovoltaikgenerators bestimmten Breite (φ) des Standorts des Photovoltaikgenerators umfasst.

**12.** Verfahren zur Evaluierung der geographischen Breite (φ) der Aufstellung eines Photovoltaikgenerators, wobei dieses Bestimmungsverfahren umfasst:

- einerseits einen Schritt der Bestimmung der Tagesdauer (D) einer Mehrzahl von Tagen, wobei dieser Bestimmungsschritt durch die Anwendung eines Verfahrens zur Bestimmung der Tagesdauer (D) mindestens eines Tages für jeden Tag dieser Mehrzahl von Tagen durchgeführt wird, das umfasst:

- einen Schritt der Messung des Wertes mindestens einer elektrischen Größe, umfassend mindestens eine elektrische Spannung und/oder mindestens einen elektrischen Strom, und zwar an einem Photovoltaikgenerator;
- einen Schritt der Erfassung einer zeitlichen Entwicklung der gemessenen Werte der mindestens einen elektrischen Größe;
- einerseits einen Schritt der Bestimmung des Zeitpunkts der Morgendämmerung (Ta) des mindestens einen Tages als den Zeitpunkt, zu dem sich die gemessenen Werte in eine bestimmte Richtung entwickeln, und andererseits einen Schritt der Bestimmung des Zeitpunkts der Abenddämmerung (Tc) des mindestens einen Tages als den Zeitpunkt, zu dem sich die gemessenen Werte in eine andere Richtung entwickeln;
- einen Schritt der Bestimmung der Tagesdauer (D) des mindestens einen Tages, und zwar ausgehend vom bestimmten Zeitpunkt der Morgendämmerung (Ta) und vom bestimmten Zeitpunkt der Abenddämmerung (Tc),
- ferner einen Schritt der Bestimmung der Veränderung der Tagesdauer (D) im Laufe dieser Mehrzahl von Tagen und,
- ferner einen Schritt der Bestimmung der geographischen Breite (φ) der Aufstellung des Photovoltaikgenerators, und zwar anhand der bestimmten Veränderung der Tagesdauer (D) im Laufe der Mehrzahl von Tagen.

**13.** Verfahren zur Evaluierung der geographischen Breite (φ) der Aufstellung eines Photovoltaikgenerators nach Anspruch 12, **dadurch gekennzeichnet, dass** der Schritt der Bestimmung der Veränderung der Tagesdauer (D) darin besteht, die Steigung der Veränderung der Tagesdauer (D) in Abhängigkeit von der Rangfolge (J) der Tage der Mehrzahl von Tagen zu berechnen.

14. Verfahren zur Evaluierung der geographischen Breite (φ) der Aufstellung eines Photovoltaikgenerators nach Anspruch 13, **dadurch gekennzeichnet, dass** der Schritt der Bestimmung der geographischen Breite (φ) der Aufstellung des Photovoltaikgenerators darin besteht, einerseits die berechnete Steigung der Veränderung der Tagesdauer (D) in Abhängigkeit von der Rangfolge (J) der Tage aus der Mehrzahl von Tagen und andererseits eine Mehrzahl von Referenzsteigungen, die jeweils einer bestimmten Aufstellungsbreite (φ) entsprechen, zu vergleichen.

15. Verfahren zur Evaluierung der geographischen Breite (φ) der Aufstellung eines Photovoltaikgenerators nach einem der Ansprüche 12 bis 14, **dadurch gekennzeichnet, dass** der Schritt der Messung des Wertes der mindestens einen elektrischen Größe, die aus mindestens einer elektrischen Spannung besteht, einen Schritt der Messung eines Wertes einer repräsentativen und/oder einer der Leerlaufspannung (Voc) nahen elektrischen Spannung am Photovoltaikgenerator umfasst.

16. Verfahren zur Evaluierung der geographischen Breite (φ) der Aufstellung eines Photovoltaikgenerators nach einem der Ansprüche 12 bis 14, **dadurch gekennzeichnet, dass** der Schritt der Messung des Wertes der mindestens einen elektrischen Größe, die aus mindestens einem elektrischen Strom besteht, einen Schritt der Messung eines Wertes eines elektrischen Stroms, der repräsentativ für einen Kurzschlussstrom (Isc) ist und/oder diesem nahekommt, am Photovoltaikgenerator umfasst.

17. Verfahren zur Evaluierung der geographischen Breite (φ) der Aufstellung eines Photovoltaikgenerators nach einem der Ansprüche 12 bis 14, **dadurch gekennzeichnet, dass** der Schritt der Erfassung einer Entwicklung einerseits einen Schritt der Berechnung der Ableitung einer Funktion der gemessenen Werte der mindestens einen elektrischen Größe und andererseits einen Schritt der Erfassung einer Entwicklung des Wertes der Ableitung der Funktion der gemessenen Werte umfasst.

18. Verfahren zur Evaluierung der geographischen Breite (φ) der Aufstellung eines Photovoltaikgenerators nach Anspruch 17, **dadurch gekennzeichnet, dass** einerseits der Schritt der Bestimmung des Zeitpunkts der Morgendämmerung (Ta) durchgeführt wird, in dem der Zeitpunkt der Morgendämmerung (Ta) als der Zeitpunkt, zu dem während des Schritts der Erfassung einer Veränderung der Messwerte der mindestens einen elektrischen Größe ein von Null verschiedener Wert der Ableitung der Funktion der Messwerte der mindestens einen elektrischen Größe erfasst wurde, und andererseits der Schritt der Bestimmung des Zeitpunkts der Abenddämmerung (Tc) durchgeführt wird, in dem der Zeitpunkt der Abenddämmerung (Tc) als der Zeitpunkt bestimmt wird, zu dem während des Schritts der Erfassung einer Veränderung der Messwerte der mindestens einen elektrischen Größe ein Wert von Null der Ableitung der Funktion der Messwerte der mindestens einen elektrischen Größe erfasst wurde.

19. Verfahren zur Evaluierung der geographischen Breite (φ) der Aufstellung eines Photovoltaikgenerators nach einem der Ansprüche 12 bis 14, **dadurch gekennzeichnet, dass** der Schritt der Erfassung einer Entwicklung einen Schritt der Erfassung eines Überschreitens mindestens eines bestimmten Schwellenwerts umfasst, durch die Messwerte der mindestens einen elektrischen Größe.

20. Verfahren zur Evaluierung der geographischen Breite (φ) der Aufstellung eines Photovoltaikgenerators nach Anspruch 19, **dadurch gekennzeichnet, dass** zum einen der Schritt der Bestimmung des Zeitpunkts der Morgendämmerung (Ta) durchgeführt wird, in dem der Zeitpunkt der Morgendämmerung (Ta) als der Zeitpunkt bestimmt wird, in dem während des Schritts der Erfassung einer Entwicklung der Messwerte der mindestens einen elektrischen Größe festgestellt wurde, dass diese Messwerte der mindestens einen elektrischen Größe einen ersten festgelegten Schwellenwert überschreiten, und andererseits der Schritt der Bestimmung des Zeitpunkts der Abenddämmerung (Tc) durchgeführt wird, in dem der Zeitpunkt der Abenddämmerung (Tc) als der Zeitpunkt bestimmt wird, zu dem während des Schritts der Erfassung einer Veränderung der Messwerte der mindestens einen elektrischen Größe festgestellt wurde, dass diese Messwerte der mindestens einen elektrischen Größe unter einen zweiten festgelegten Schwellenwert fallen.

21. Verfahren zur Evaluierung der geographischen Breite (φ) der Aufstellung eines Photovoltaikgenerators nach einem der Ansprüche 12 bis 14, **dadurch gekennzeichnet, dass** der Schritt der Bestimmung der Tagesdauer (D) des mindestens einen Tages einerseits einen Schritt zum Ablaufenlassen der Zeit umfasst, ferner einen Schritt zum Auslösen des Ablaufens der Zeit zum festgelegten Zeitpunkt der Morgendämmerung (Ta) sowie einen Schritt zum Anhalten des Ablaufens der Zeit zum festgelegten Zeitpunkt der Abenddämmerung (Tc) und ferner noch einen Schritt zum Erfassen der zwischen dem Auslösen und dem Anhalten des Zeitablaufs verstrichenen Zeit und ferner auch einen Schritt zum Ableiten der Tagesdauer (D) aus der erfassten verstrichenen Zeit.

22. Verfahren zur Steuerung einer dynamischen Anlage, die einerseits ein dynamisches System, andererseits einen Photovoltaikgenerator und ferner eine Steuervorrichtung für diese dynamische Anlage umfasst, **dadurch gekennzeichnet, dass** einerseits das Steuerungsverfahren darin besteht, die dynamische Anlage in Abhängigkeit von mindestens einer Temperatur, mindestens einer Jahreszeit und der geographischen Breite (φ) des Standorts der dynamischen Anlage zu steuern, und dass andererseits die geographische Breite (φ) des Standorts der dynamischen Anlage durch die Anwendung des Verfahrens zur Evaluierung der geographischen Breite (φ) der Aufstellung des Photovoltaikgenerators nach einem der Ansprüche 12 bis 21 evaluiert wird.

**Claims**

1. System for evaluating the latitude (φ) of installation of a photovoltaic generator, this evaluation system comprises:

   - a device for determining the length (D) of the day of at least one day, this device comprises:

     - firstly, a photovoltaic generator,
     - secondly, means for measuring the value of at least one electrical quantity consisting of at least one electric voltage and/or at least one electric current, in the photovoltaic generator,
     - thirdly, means for detecting a change in the measured values of said at least one electrical quantity over time,
     - moreover, means for determining the time of the dawn (Ta) of said at least one day as being the time at which the measured values evolve in a determined direction as well as means for determining the time of the twilight (Tc) of said at least one day as being the time at which the measured values evolve in another direction, and
     - furthermore, means for determining the length (D) of the day of said at least one day, from the determined time of the dawn (Ta) and the determined time of the twilight (Tc),
   - means for determining the length (D) of the day of a plurality of days, from the length (D) of the day provided by the device for determining the length (D) of the day of at least one day for this plurality of days,
   - means for determining the variation in the length (D) of the day over this plurality of days, and
   - means for evaluating the latitude (φ) of installation of the photovoltaic generator, on the basis of the determined variation in the length (D) of the day over the plurality of days.

2. System for evaluating the latitude (φ) of installation of a photovoltaic generator according to claim 1, **characterised in that** the means for determining the variation in the length (D) of the day comprise calculation means that are configured to calculate the slope of the variation in the length (D) of the day as a function of the rank (J) of the days of the plurality of days.

3. System for evaluating the latitude (φ) of installation of a photovoltaic generator according to claim 2, **characterised by** the fact that the means for evaluating the latitude (φ) of installation of the photovoltaic generator include comparison means that are configured to compare, on the one hand, the calculated slope of the variation in the length (D) of the day as a function of the rank (J) of the days of the plurality of days and, on the other hand, a plurality of reference slopes each corresponding to a determined latitude (φ).

4. System for evaluating the latitude (φ) of installation of a photovoltaic generator according to any one of the preceding claims, **characterised by** the fact that the means for measuring the value of at least one electrical quantity consisting of at least one electric voltage include means for measuring, in the photovoltaic generator, a value of an electric voltage representative of and/or close to an open-circuit voltage (Voc).

5. System for evaluating the latitude (φ) of installation of a photovoltaic generator according to any one of claims 1 to 3, **characterised by** the fact that the means for measuring the value of at least one electrical quantity consisting of at least one electric current include means for measuring, in the photovoltaic generator, a value of an electric current representative of and/or close to a short-circuit current (Isc).

6. System for evaluating the latitude (φ) of installation of a photovoltaic generator according to any one of claims 1 to 3, **characterised by** the fact that the means for detecting a change in the measured values of said at least one electrical quantity, on the one hand, include means for calculating the derivative of a function of the measured values of said at least one electrical quantity and, on the other hand, are configured to detect a change in the value of the derivative of the function of the measured values.

7. System for evaluating the latitude ($\varphi$) of installation of a photovoltaic generator according to claim 6, **characterised by** the fact that, on the one hand, the means for determining the time of the dawn (Ta) are configured to determine the time of the dawn (Ta) as being the time at which the means for detecting a change in the measured values of said at least one electrical quantity detect a non-zero value of the derivative of the function of the measured values of said at least one electrical quantity and, on the other hand, the means for determining the time of the twilight (Tc) are configured to determine the time of the twilight (Tc) as being the time at which the means for detecting a change in the measured values of said at least one electrical quantity detect a zero value of the derivative of the function of the measured values of said at least one electrical quantity.

8. System for evaluating the latitude ($\varphi$) of installation of a photovoltaic generator according to any one of claims 1 to 3, **characterised by** the fact that the means for detecting a change in the measured values of said at least one electrical quantity are configured to detect measured values of said at least one electrical quantity that cross at least one determined threshold.

9. System for evaluating the latitude ($\varphi$) of installation of a photovoltaic generator according to claim 8, **characterised by** the fact that, on the one hand, the means for determining the time of the dawn (Ta) are configured to determine the time of the dawn (Ta) as being the time at which the means for detecting a change in the measured values of said at least one electrical quantity detect that these measured values of said at least one electrical quantity exceed a first determined threshold and, on the other hand, the means for determining the time of the twilight (Tc) are configured to determine the time of the twilight (Tc) as being the time at which the means for detecting a change in the measured values of said at least one electrical quantity detect that these measured values of said at least one electrical quantity fall below a second determined threshold.

10. System for evaluating the latitude ($\varphi$) of installation of a photovoltaic generator according to any one of the preceding claims, **characterised by** the fact that the means for determining the length (D) of the day of said at least one day include, firstly, means for counting time, secondly, control means which are configured to trigger the time-counting means at the determined time of the dawn (Ta) as well as to stop the time-counting means at the determined time of the twilight (Tc) and, moreover, means for reading the time elapsed between the triggering and the stopping of the time-counting means and, furthermore, means for deducing the length (D) of the day from the elapsed time read.

11. Dynamic piece of equipment which comprises, on the one hand, a dynamic system, on the other hand, a photovoltaic generator and, also, a device for controlling this dynamic piece of equipment, **characterised in that**, on the one hand, it comprises a system for evaluating the latitude ($\varphi$) of installation of the photovoltaic generator in accordance with any one of the preceding claims and, on the other hand, the control device comprises means for controlling the dynamic piece of equipment according to at least one temperature, at least one period of the year and the latitude ($\varphi$) of installation of the photovoltaic generator determined by the system for evaluating the latitude ($\varphi$) of installation of the photovoltaic generator.

12. Method for evaluating the latitude ($\varphi$) of installation of a photovoltaic generator, this evaluation method comprises:

- on the one hand, a step of determining the length (D) of the day of a plurality of days, this determination step being carried out by implementing, for each day of this plurality of days, a method of determining the length (D) of the day of at least one day which includes:

- a step of measuring the value of at least one electrical quantity consisting of at least one electric voltage and/or at least one electric current, in a photovoltaic generator;
- a step of detecting a change in the measured values of said at least one electrical quantity over time;
- on the one hand, a step of determining the time of the dawn (Ta) of said at least one day as being the time at which the measured values evolve in a determined direction and, on the other hand, a step of determining the time of the twilight (Tc) of said at least one day as being the time at which the measured values evolve in another direction;
- a step of determining the length (D) of the day of said at least one day, from the determined time of the dawn (Ta) and the determined time of the twilight (Tc),
- on the other hand, a step of determining the variation in the length (D) of the day over this plurality of days, and
- furthermore, a step of evaluating the latitude ($\varphi$) of installation of the photovoltaic generator, on the basis of the determined variation in the length (D) of the day over the plurality of days.

13. Method for evaluating the latitude (φ) of installation of a photovoltaic generator according to claim 12, **characterised by** the fact that the step of determining the variation in the length (D) of the day consists in calculating the slope of the variation in the length (D) of the day as a function of the rank (J) of the days of the plurality of days.

14. Method for evaluating the latitude (φ) of installation of a photovoltaic generator according to claim 13, **characterised by** the fact that the step of evaluating the latitude (φ) of installation of the photovoltaic generator consists in comparing, on the one hand, the calculated slope of the variation in the length (D) of the day as a function of the rank (J) of the days of the plurality of days and, on the other hand, a plurality of reference slopes each corresponding to a determined latitude (φ).

15. Method for evaluating the latitude (φ) of installation of a photovoltaic generator according to any one of claims 12 to 14, **characterised by** the fact that the step of measuring the value of said at least one electrical quantity consisting of at least one electric voltage includes a step of measuring, in the photovoltaic generator, a value of an electric voltage representative of and/or close to an open-circuit electric voltage (Voc).

16. Method for evaluating the latitude (φ) of installation of a photovoltaic generator according to any one of claims 12 to 14, **characterised in that** the step of measuring the value of said at least one electrical quantity consisting of at least one electric current comprises a step of measuring, in the photovoltaic generator, a value of an electric current representative of and/or close to a short-circuit current (Isc).

17. Method for evaluating the latitude (φ) of installation of a photovoltaic generator according to any one of claims 12 to 14, **characterised by** the fact that the step of detecting a change includes, on the one hand, a step of calculating the derivative of a function of the measured values of said at least one electrical quantity and, on the other hand, a step of detecting a change in the value of the derivative of the function of the measured values.

18. Method for evaluating the latitude (φ) of installation of a photovoltaic generator according to claim 17, **characterised in that**, on the one hand, the step of determining the time of the dawn (Ta) is carried out by determining the time of the dawn (Ta) as being the time at which, during the step of detecting a change in the measured values of said at least one electrical quantity, a non-zero value of the derivative of the function of the measured values of said at least one electrical quantity was detected and, on the other hand, the step of determining the time of the twilight (Tc) is carried out by determining the time of the twilight (Tc) as being the time at which, during the step of detecting a change in the measured values of said at least one electrical quantity, a zero value of the derivative of the function of the measured values of said at least one electrical quantity was detected.

19. Method for evaluating the latitude (φ) of installation of a photovoltaic generator according to any one of claims 12 to 14, **characterised in that** the step of detecting a change comprises a step of detecting a crossing of at least one determined threshold by the measured values of said at least one electrical quantity.

20. Method for evaluating the latitude (φ) of installation of a photovoltaic generator according to claim 19, **characterised by** the fact that, on the one hand, the step of determining the time of the dawn (Ta) is carried out by determining the time of the dawn (Ta) as being the time at which, during the step of detecting a change in the measured values of said at least one electrical quantity, it was detected that these measured values of said at least one electrical quantity exceed a first determined threshold and, on the other hand, the step of determining the time of the twilight (Tc) is carried out by determining the time of the twilight (Tc) as being the time at which, during the step of detecting a change in the measured values of said at least one electrical quantity, it was detected that these measured values of said at least one electrical quantity fall below a second determined threshold.

21. Method for evaluating the latitude (φ) of installation of a photovoltaic generator according to any one of claims 12 to 14, **characterised by** the fact that the step of determining the length (D) of the day of said at least one day includes, firstly, a step of counting time, secondly, a step of triggering the time counting at the determined time of the dawn (Ta) as well as a step of stopping the time counting at the determined time of the twilight (Tc) and, moreover, a step for reading the time elapsed between the triggering and the stopping of the time counting and, furthermore, a step for deducing the length (D) of the day from the elapsed time read.

22. Method for controlling a dynamic piece of equipment that includes, on the one hand, a dynamic system, on the other hand, a photovoltaic generator, and, moreover, a device for controlling this dynamic piece of equipment, **charac-**

**terised by** the fact that, on the one hand, the control method consists in controlling the dynamic piece of equipment according to at least one temperature, at least one period of the year and the latitude ($\varphi$) of installation of the dynamic piece of equipment and that, on the other hand, the latitude ($\varphi$) of installation of the dynamic piece of equipment is evaluated by implementing the method for evaluating the latitude ($\varphi$) of installation of the photovoltaic generator according to any one of claims 12 to 21.

[Fig 1]

FIG. 1

[Fig 2]

FIG. 2

[Fig 3]

FIG. 3

[Fig 4]

EP 4 447 316 B1

FIG. 4

**EP 4 447 316 B1**

**RÉFÉRENCES CITÉES DANS LA DESCRIPTION**

**Documents brevets cités dans la description**

*   EP 3846338 A